# EUROPÄISCHE PATENTSCHRIFT

(11) **EP 1 477 338 B1**
(45) Veröffentlichungstag und Bekanntmachung des Hinweises auf die Patenterteilung: **27.12.2006**
(21) Anmeldenummer: 04019767.5
(22) Anmeldetag: 12.08.2000
(51) Int. Cl.: B60D 1/36, B60D 1/06, B60D 1/54

(54) **Anhängevorrichtung**
Trailer coupling
Attelage de remorque

(30) Priorität: 02.06.2000 DE 10027573
(43) Veröffentlichungstag der Anmeldung: 17.11.2004
(62) Teilanmeldung aus: 00117478.8
(73) Patentinhaber: SCAMBIA INDUSTRIAL DEVELOPMENTS AKTIENGESELLSCHAFT, 9494 Schaan (LI)
(72) Erfinder: Henke, Dietfried, 70437 Stuttgart (DE); Riehle, Jörg, 71679 Asperg (DE)
(74) Vertreter: Hoeger, Stellrecht & Partner Patentanwälte

(56) Entgegenhaltungen:
- EP-A- 0 872 364
- EP-A- 1 002 671
- EP-A- 1 024 036
- DE-A- 19 810 378
- US-A- 4 593 264
- US-A- 4 852 901
- US-A- 5 159 312
- US-A- 5 434 552

## Beschreibung

Die Erfindung betrifft eine Anhängevorrichtung für Kraftfahrzeuge, umfassend einen an einer fahrzeugfesten Aufnahme gehaltenen Kugelhals, der an seinem der Aufnahme abgewandten Ende eine Kupplungskugel trägt, einen Antrieb, mit welchem der Kugelhals aus einer Arbeitsstellung herausbewegbar ist.

Derartige Anhängevorrichtungen sind aus dem Stand der Technik bekannt EP 1 002 671 zeigt eine solche Anhängenvorrichtung. Bei diesen besteht das Problem, daß nicht sichergestellt ist, daß ein Herausbewegen des Kugelhalses aus der Arbeitsstellung unter Bedingungen erfolgt, die sicherheitstechnisch zulässig sind.

Der Erfindung liegt daher die Aufgabe zugrunde, eine Anhängevorrichtung der gattungsgemäßen Art derart zu verbessern, daß diese funktionssicher arbeitet.

Diese Aufgabe wird bei einer Anhängevorrichtung der eingangs beschriebenen Art erfindungsgemäß dadurch gelöst, daß die Anhängevorrichtung mit mindestens einem ein Indiz für die Präsenz eines Anhängers erfassenden Sensor zum Erzeugen eines Anhängerpräsenzsignals versehen ist, daß eine Steuerung vorgesehen ist, mit welcher der Antrieb ansteuerbar ist und daß die Steuerung das Anhängerpräsenzsignal des mindestens einen Sensors abfragt und beim Vorliegen des Anhängerpräsenzsignals eine Bewegung des Kugelhalses blockiert.

Der Vorteil der erfindungsgemäßen Lösung ist somit darin zu sehen, daß bereits bei Vorliegen des Anhängerpräsenzsignals eine Bewegung des Kugelhalses automatisch verhindert wird und somit Fehlfunktionen vermieden werden.

Insbesondere wird bei der erfindungsgemäßen Lösung ein Übergang des Kugelhalses in eine Ruhestellung verhindert, so daß damit eine der schwerwiegendsten Fehlfunktionen einer derartigen Anhängevorrichtung ausgeschlossen ist.

Eine besonders günstige Lösung sieht vor, daß die Anhängevorrichtung eine Fixiereinrichtung aufweist, welche in einem Fixierzustand den Kugelhals in einer Arbeitsstellung festlegt und welche in einem Lösezustand den Kugelhals für eine Bewegung aus der Arbeitsstellung freigibt. Dabei ist es zweckmäßig, wenn mit der Steuerung eine Änderung des Zustands der Fixiereinrichtung blockierbar ist.

Insbesondere ist es günstig, wenn die Steuerung bei Vorliegen des Anhängerpräsenzsignals eine Änderung des Zustandes der Fixiereinrichtung blockiert.

Der Vorteil dieser Lösung ist somit darin zu sehen, daß bereits bei Vorliegen des Anhängerpräsenzsignals eine Zustandsänderung der Fixiereinrichtung automatisch verhindert wird und somit Fehlfunktionen vermieden werden.

Insbesondere wird bei dieser Lösung ein Übergang der Fixiereinrichtung von dem Fixierzustand in den Lösezustand verhindert, so daß damit eine der schwerwiegendsten Fehlfunktionen einer derartigen Anhängevorrichtung ausgeschlossen ist.

Prinzipiell ist es im Rahmen der erfindungsgemäßen Lösung denkbar, daß die Steuerung einen Sensor abfragt, welcher ein Indiz für die Präsenz eines Anhängers erfaßt.

Besonders günstig ist es jedoch, wenn die Steuerung die Anhängerpräsenzsignale mehrerer Sensoren abfragt und bei Vorliegen bereits eines Anhängerpräsenzsignals eine Änderung des Zustands der Fixiereinrichtung blockiert, so daß hierdurch die Sicherheit noch deutlich erhöht werden kann.

Insbesondere besteht die Möglichkeit, in unterschiedlicher Weise Indizien für die Anhängerpräsenz abzufragen und somit die Sicherheitsfunktionen zu verbessern, so daß bei eventueller Fehlanzeige eines der Sensoren damit gerechnet werden kann, daß der andere der Sensoren auf alle Fälle zu einer Blockierung der Fixiereinrichtung führt.

Hinsichtlich der Art und Weise, welche Indizien von den Sensoren erfaßt werden, wurden bislang keine näheren Angaben gemacht. So sind die unterschiedlichsten Indizien für einen Anhänger durch einen Sensor detektierbar.

Ein derartiges Indiz könnte beispielsweise eine Erfassung der Zug- oder Stützlast auf die Kupplung sein.

Eine besonders vorteilhafte Lösung sieht vor, daß der Sensor eine Anhängerstromversorgung überwacht und deren Existenz als Indiz für einen angehängten Anhänger wertet und in diesem Fall das Anhängerpräsenzsignal abgibt.

Eine derartige Überwachung der Anhängerstromversorgung kann ebenfalls in unterschiedlichster Art und Weise erfolgen.

Eine vorteilhafte Lösung sieht vor, daß der Sensor einen in die Steckdose für die Anhängerstromversorgung eingesteckten Stecker des Anhängers erkennt. Dabei wird die Existenz des in die Steckdose eingesteckten Steckers als ein Indiz für einen Anhänger angesehen.

Diese Überprüfung der Existenz des Steckers könnte über die eingesteckten elektrischen Kontakte erfolgen.

Eine besonders einfache Lösung sieht vor, daß der Sensor einen Steckerkörper des in die Steckdose eingesteckten Steckers erfaßt und somit über die Erfassung der Präsenz des Steckerkörpers den in die Steckdose eingesteckten Stecker erkennt.

Dies könnte beispielsweise mit einem berührungslosen Schalter erfolgen. Eine besonders einfache Lösung sieht jedoch vor, daß der den Steckerkörper erfassende Sensor einen Tastschalter umfaßt.

Alternativ oder ergänzend zum Erfassen des in die Steckdose eingesteckten Steckers als Indiz für den Anhänger sieht eine weitere Lösung vor, daß der Sensor als eine elektrische Last des Anhängers erkennende Schaltung ausgebildet ist.

Damit erfaßt der Sensor nicht die Präsenz des Steckers, sondern erfaßt, ob mit der Steckdose eine elektrische Last verbunden ist, die typisch für einen Anhänger ist.

Ein derartiger Sensor kann nun zwar in der Steckdose angeordnet sein. Eine besonders günstige Lösung sieht jedoch vor, daß der Sensor in eine Versorgung für die Steckdose integriert ist und somit unabhängig von der Steckdose angeordnet sein kann.

Alternativ oder ergänzend zur Überwachung der Anhängerstromversorgung sieht eine weitere vorteilhafte Lösung vor, daß der Sensor die Kupplungskugel überwacht und ein Angreifen des Objekts an der Kupplungskugel als Indiz für die Präsenz eines Anhängers wertet.

Der Vorteil dieser Lösung ist darin zu sehen, daß der tatsächlich für die Sicherheit bei der Zustandsänderung der Fixiereinrichtung relevante Tatbestand erfaßt wird, nämlich die Präsenz eines an der Kupplungskugel angreifenden Objekts, wobei eine derartige Erfassung eines an der Kupplungskugel angreifenden Objekts auch möglicherweise Situationen mit als Indiz für die Präsenz eines Anhängers wertet, die tatsächlich gar nicht die Präsenz eines Anhängers darstellen.

Dennoch ist es aus Sicherheitsgründen vorteilhafter, Tatbestände mitzuerfassen, die tatsächlich nicht die Präsenz eines Anhängers darstellen, wenn damit jedoch sichergestellt werden kann, daß in all den Fällen, in welchen ein Anhänger an der Kupplungskugel angreift, eine Blockierung der Fixiereinrichtung erfolgt.

Hinsichtlich der Anordnung eines derartigen Sensors wurden im Zusammenhang mit der bisherigen Erläuterung der erfindungsgemäßen Lösung keine näheren Angaben gemacht. So ist es beispielsweise denkbar, daß der Sensor im Bereich einer Steckdose angeordnet ist. Diese Lösung hat den Vorteil, daß bei der Steckdose ohnehin eine elektrische Verbindung zur Bordelektrik des Kraftfahrzeugs vorliegt und somit in-einfacher Weise eine Versorgung und eine Kommunikation mit dem Sensor erfolgen kann.

Hinsichtlich der Realisierbarkeit ist es besonders günstig, wenn der Sensor in die Steckdose integriert ist und somit auch mechanisch ein einfacher Schutz für den Sensor erhältlich ist, da die Steckdose ohnehin möglichst geschützt angeordnet werden soll.

Im Fall des Vorsehens des Sensors an der Steckdose kann die Steckdose, wie konventionell bekannt, dem Kugelhals zugeordnet sein, jedoch neben der Anhängevorrichtung angeordnet sein.

Eine weitere vorteilhafte Möglichkeit der Anordnung des Sensors sieht vor, daß der Sensor am Kugelhals angeordnet ist. Diese Lösung hat den großen Vorteil, daß mit dieser der Sensor mit einfachen Mitteln möglichst nahe der Kupplungskugel angeordnet werden kann und somit eine möglichst direkte Überwachung der Kupplungskugel, insbesondere mit erheblicher Reduktion von Störungen, erfolgen kann.

Dabei kann der Sensor beispielsweise auf einer Oberfläche des Kugelhalses, beispielsweise in einem Gehäuse, fixiert sein.

Da an dem Kugelhals in vielen Fällen eine Steckdose angeordnet ist, ist es besonders zweckmäßig, den Sensor in der Steckdose anzuordnen, um in einfacher Weise die ohnehin vorhandene Verbindung zur Bordelektrik oder Bordelektronik nutzen zu können.

In diesem Fall ist diese Lösung besonders günstig, da mit der am Kugelhals vorgesehenen Steckdose die Möglichkeit besteht, den Sensor möglichst nahe an der Kupplungskugel zu plazieren.

Dabei könnte der Sensor beispielsweise zusätzlich zum Steckdosengehäuse mit diesem verbunden angeordnet sein.

Eine hinsichtlich der Funktionssicherheit und der Herstellbarkeit besonders günstige Lösung sieht jedoch vor, daß der Sensor in die Steckdose integriert ist, das heißt, daß beipielsweise der Sensor und die Steckdose in einem gemeinsamen Gehäuse angeordnet sind.

Eine besonders zweckmäßige Lösung sieht dabei vor, den Sensor bei einer im Kugelhals integrierten Steckdose im Bereich eines über den Kugelhals überstehenden Gehäuseteils vorzusehen.

Eine andere vorteilhafte Möglichkeit der Unterbringung des Sensors sieht vor, daß der Sensor im Kugelhals angeordnet ist, wodurch ein optimaler Schutz für den Sensor gegeben ist.

Hinsichtlich der Detektion eines an der Kupplungskugel angreifenden Objekts sind die unterschiedlichsten Lösungsmöglichkeiten denkbar. So sieht eine vorteilhafte Ausführungsform vor, daß der Sensor über einen seitlich des Kugelhalses in Richtung der Kupplungskugel verlaufenden Erfassungsbereich die Kupplungskugel erfaßt, wobei vorzugsweise ein vom Erfassungsbereich überdeckter Bereich der Oberfläche der Kupplungskugel erfaßt wird.

Alternativ oder ergänzend dazu sieht ein weiteres Ausführungsbeispiel vor, daß der Sensor das an der Kupplungskugel angreifende Objekt über den sich zwischen dem Sensor und der Kupplungskugel erstreckenden Abschnitt des Kugelhalses detektiert.

Ein derartiges Detektieren kann über eine Vielzahl von Mechanismen erfolgen, die sich auf den Abschnitt des Kugelhalses zwischen dem Sensor und der Kupplungskugel auswirken. Beispielsweise kann dies jegliche Art von Materialbelastung oder Änderung von Materialeigenschaften sein, die über einen hierzu geeigneten Sensor detektiert werden.

Besonders vorteilhaft ist es, die Einwirkung auf die Kupplungskugel über Körperschall zu erfassen, der sich über den zwischen Sensor und Kupplungskugel erstreckenden Abschnitt des Kugelhalses ausbreitet.

Eine weitere Möglichkeit zum Erfassen der Einwirkung eines Objekts auf die Kupplungskugel ist die, den Sensor in der Kupplungskugel selbst anzuordnen, wobei alle Detektionsmöglichkeiten, wie z. B. Ultraschall, Infrarot oder mechanische Betätigung, möglich sind.

In diesem Fall läßt sich die Einwirkung eines Objekts auf die Kupplungskugel besonders günstig erfassen, allerdings ist in diesem Fall die Kupplungskugel mit den notwendigen Hohlräumen zu versehen.

Besonders günstig läßt sich dies realisieren, wenn der Sensor einen einer Seite der Kupplungskugel zugeordneten Erfassungsbereich aufweist, das heißt, wenn der in der Kupplungskugel angeordnete Sensor beispielsweise einen oberen der Fahrbahn abgewandten Bereich der Kupplungskugel oder auch einen seitlichen Bereich der Kupplungskugel zu detektieren in der Lage ist.

Es ist aber auch denkbar, den Sensor so auszubilden, daß dieser alle wesentlichen Oberflächenbereiche der Kupplungskugel erfaßt, an denen ein Objekt angreifen kann.

Die Anordnung des Sensors in der Kupplungskugel ist insbesondere dann vorteilhaft, wenn der Sensor ein Tastsensor ist, das heißt, wenn mittels des Sensors ein Abtasten mindestens einer Seite der Kupplungskugel erfolgen soll.

Hinsichtlich der Art des Sensors wurden bislang keine näheren Angaben gemacht. So sieht eine einfache Art der Ausbildung des Sensors vor, daß der Sensor als durch Einwirkung betätigbarer Sensor arbeitet.

Ein derartiger durch Einwirkung betätigbarer Sensor ist beispielsweise ein Sensor, bei welchem eine mechanische Einwirkung erkannt wird und diese dann zum Auslösen des Anhängerpräsenzsignals führt. Eine andere Realisierungsform eines derartigen durch Einwirkung betätigbaren Sensors ist eine solche, bei welchem eine manuelle Einwirkung erkannt wird und zur Auslösung des Anhängerpräsenzsignals führt.

Eine besonders günstige Realisierungsform eines derartigen durch Einwirkung betätigbaren Sensors ist die, daß der Sensor einen Taststößel aufweist, dessen Stellungen erfaßbar sind und bei welchem insbesondere das Erreichen einer Stellung zum Auslösen des Signals führt.

Eine andere vorteilhafte Realisierungsform eines derartigen durch Einwirkung betätigbaren Sensors ist die, daß der Sensor einem Detektorhebel aufweist, dessen Stellungen erfaßbar sind, wobei bei einer dieser Stellungen eine Auslösung des Anhängerpräsenzsignals erfolgt.

Das Erfassen der Einwirkung kann in unterschiedlichster Art und Weise erfolgen. Eine besonders einfache Lösung sieht vor, daß der Sensor einen Schalter umfaßt.

Dieser Schalter kann auch ein berührungsloser Schalter sein.

Besonders günstig ist es, wenn der Sensor einen mechanisch betätigbaren Schalter umfaßt, welcher sich beispielsweise durch den Taststößel oder durch den Detektionshebel betätigen läßt.

Beispielsweise läßt sich ein derartiger Sensor besonders einfach als mechanischer Tastsensor realisieren, welcher im einfachsten Fall einen Schalter umfaßt.

Mit einem derartigen Schalter ist in besonders einfacher Weise ein Zustandssignal bezüglich des Angreifens oder Nichtangreifens des Objekts an der Kupplungskugel generierbar.

Darüber hinaus besteht aber auch die Möglichkeit, einen als Tastsensor arbeitenden Sensor am Kugelhals anzuordnen, wobei der Tastsensor in diesem Fall ebenfalls als mechanischer Tastsensor ausgebildet sein könnte.

Alternativ zur Ausbildung des Sensors als Tastsensor sieht eine besonders günstige Lösung vor, daß der Sensor berührungslos arbeitet.

Ein berührungslos arbeitender Sensor ist in unterschiedlichster Art und Weise realisierbar. Eine Lösung sieht vor, daß der Sensor als optischer Sensor arbeitet, beispielsweise mit Infrarotstrahlung.

Eine andere vorteilhafte Lösung sieht vor, daß der Sensor als Radarsensor arbeitet.

Ferner ist es beispielsweise denkbar, daß der Sensor als Ultraschallsensor arbeitet.

Dabei sind zwei verschiedene Ultraschalldetektionsmethoden möglich, nämlich einmal Detektion über sich in Luft ausbreitenden Ultraschall oder Detektion über sich als Körperschall ausbreitenden Ultraschall.

Eine besonders vorteilhafte Ausführungsform eines erfindungsgemäßen berührungslos arbeitenden Sensors sieht jedoch vor, daß dieser einen Sender und einen Detektor umfaßt und somit das vom Sender ausgesandte Signal je nach dem, ob ein Objekt am Kugelhals angreift oder nicht, Veränderungen erfährt, die durch den Detektor erfaßbar sind.

Diese Lösung wird insbesondere bei Detektion über Infrarot, Radarwellen oder Ultraschall in Luft eingesetzt.

In diesem Fall sind auch die Anordnung des Sensors am Kugelhals oder in der Kupplungskugel nicht nur als Alternativen anzusehen, sondern es können auch beide Fälle auftreten, bei denen ein Teil des Sensors am Kugelhals und der andere in der Kupplungskugel angeordnet ist.

Alternativ zum Vorsehen eines Sensors, welcher einen Sender und einen Detektor umfaßt, besteht auch die Möglichkeit, den Sensor mit einem einzigen Wandler auszustatten.

Ein derartiger Wandler kann beispielsweise sowohl als Sender oder als Empfänger betreibbar sein.

Es besteht aber auch die Möglichkeit, bei Verwenden eines einzigen Wandlers diesen bei der Resonanzfrequenz des Wandlers und der an diesen ankoppelnden Umgebung zu betreiben, wobei die Beeinflussung der Resonanzfrequenz durch körperliche Beeinflussung der ankoppelnden Umgebung des Wandlers erfolgt.

Beispielsweise besteht im Fall eines Ultraschallwandlers die Möglichkeit, die Resonanzfrequenz des Ultraschallwandlers durch die ankoppelnde Umgebung, also beispielsweise durch die nahe an demselben angeordnete und durch Körperschall angekoppelte Kupplungskugel, zu beeinflussen, wobei je nach dem, ob an der Kupplungskugel ein Objekt angreift oder nicht, der Wandler seine Resonanzfrequenz ändert.

Prinzipiell kann der Sensor so ausgebildet sein, daß er alle Objekte erfaßt, die an der Kupplungskugel angreifen.

Es ist aber auch im Rahmen der erfindungsgemäßen Lösung der Fall denkbar, daß der Sensor als an der Kupplungskugel angreifendes Objekt nur ein Kugelkupplungsstück oder ein ähnlich nachhaltig an der Kupplungskugel angreifendes Objekt erfaßt, welches zur Verbindung eines Anhängers mit der erfindungsgemäßen Anhängevorrichtung dient und in bekannter Weise die Kupplungskugel umgreift.

Um insbesondere bei fortlaufender Überwachung der Kupplungskugel die Sensoraktivitäten zeitlich zu beschränken, insbesondere in den Fällen, in denen der Sensor nennenswert Leistung zur Detektion eines an der Kupplungskugel angreifenden Objekts benötigt, oder in den Fällen, in denen der Sensor für die Umgebung oder Bedienungsperson erkennbar arbeitet, ist dem Sensor vorzugsweise eine Steuerschaltung zugeordnet, welche den Sensor während Detektionszeitintervallen aktiviert, den vom aktivierten Sensor erkannten Zustand speichert und anschließend den Sensor deaktiviert.

Eine derartige Lösung hat den großen Vorteil, daß der Sensor nicht ständig arbeitet, sondern daß der Sensor beispielsweise nur zu Zeiten aktiviert wird, in denen zu erwarten ist, daß sich eine Änderung des Einwirkungszustandes der Kupplungskugel ergibt oder wenn der Einwirkungszustand der Kupplungskugel beachtlich ist.

Beispielsweise sieht diese Sensorsteuerschaltung vor, daß eine Aktivierung des Sensors bei Anliegen eines Startsignals für die Sensorsteuerschaltung erfolgt, dann den Einwirkungszustand der Kupplungskugel erfaßt und speichert und schließlich eine Deaktivierung des Sensors erfolgt.

Hinsichtlich der Speicherzeitdauer sind die unterschiedlichsten Möglichkeiten denkbar.

Beispielsweise ist es denkbar, den vom Sensor erkannten Einwirkungszustand für eine definierte Zeit nach Deaktivierung des Sensors noch zu speichern und somit erkennbar zu halten.

Eine besonders günstige Lösung sieht vor, daß die Sensorsteuerschaltung den vom aktivierten Sensor erkannten Einwirkungszustand so lange speichert, bis eine erneute Aktivierung des Sensors erfolgt.

Um mit einem erfindungsgemäßen Sensor über einen gewissen Zeitraum den Einwirkungszustand der Kupplungskugel überprüfen zu können, ist vorzugsweise vorgesehen, daß die Sensorsteuerschaltung nach einem festlegbaren Zeitintervall den Sensor erneut aktiviert und den von diesem erfaßten Zustand speichert.

Dabei ist es denkbar, dieses Zeitintervall fest vorzugeben, so daß nach Deaktivierung des Sensors das Zeitintervall abgewartet wird und dann selbständig durch die Sensorsteuerschaltung eine erneute Aktivierung des Sensors erfolgt.

Dies hätte jedoch zur Konsequenz, daß eine einmal gestartete Sensorsteuerschaltung stets nach Ablauf des Zeitintervalls erneut den Sensor aktiviert, so lange bis die Sensorsteuerschaltung abgeschaltet wird.

Noch vorteilhafter ist es jedoch, wenn die Sensorsteuerschaltung das Zeitintervall nach festgelegten Zeiträumen verändert.

So ist es beispielsweise denkbar, nach einem Startsignal für die Sensorsteuerschaltung zunächst während eines ersten Zeitraums stets nach kurzen Zeitintervallen den Sensor erneut zu aktivieren, dann jedoch nach Ablauf dieses ersten Zeitraums die Zeitintervalle zu vergrößern und beispielsweise während eines zweiten Zeitraums den Sensor stets nach Ablauf der verlängerten Zeitintervalle erneut zu aktivieren.

Um insbesondere während Standzeiten des Kraftfahrzeugs oder längerer Fahrten Leistung zu sparen, ist es ferner vorteilhaft, wenn die Sensorsteuerschaltung nach Ablauf eines aktiven Modes in einen inaktiven Mode übergeht, in welchem keine selbständige Aktivierung des Sensors mehr erfolgt.

In diesem Fall erfolgt somit während des aktiven Modes stets ein selbständiges Aktivieren des Sensors nach Ablauf des jeweils festgelegten Zeitintervalls und am Ende des aktiven Modes, dessen Zeitraum ebenfalls festlegbar ist, ein Übergang in den inaktiven Mode, in welchem keine selbständige Aktivierung des Sensors mehr erfolgt, so lange bis die erfindungsgemäße Sensorsteuerschaltung wieder ein Startsignal erhält.

Eine weitere vorteilhafte Lösung sieht vor, daß die Sensorsteuerschaltung das Zeitintervall ereignisabhängig festlegt, das heißt, daß die Sensorsteuerschaltung in der Lage ist, unterschiedliche Ereignisse zu unterscheiden und je nach Ereignis das Zeitintervall festlegt.

Ein derartiges Ereignis wäre beispielsweise der Übergang des Kugelhalses von der Ruhestellung in die Arbeitsstellung, ein anderes Ereignis wäre ein Abstellen des Kraftfahrzeugs und ein weiteres Ereignis wäre eine Aktivierung einer

Bewegung des Kugelhalses von der Ruhestellung in die Arbeitsstellung. Je nach dem jeweiligen Ereignis könnte somit eine Überprüfung des Zustandes der Kupplungskugel nach unterschiedlichen, von der Sensorsteuerung festgelegten Zeitintervallen für bestimmte Zeiträume erfolgen.

Eine besonders bevorzugte Ausführungsform der erfindungsgemäßen Anhängevorrichtung sieht vor, daß der Kugelhals mittels eines Antriebs zwischen einer Arbeitsstellung und einer Ruhestellung bewegbar ist und in der Arbeitsstellung mit der Fixiereinrichtung festlegbar ist, daß eine Steuerung vorgesehen ist, mit welcher die Bewegung und Fixierung steuerbar ist und daß die Steuerung das Anhängerpräsenzsignal des mindestens einen Sensors erfaßt und bei Vorliegen eines einem an der Kupplungskugel einwirkenden Objekt entsprechenden Zustandssignals ein Lösen der Fixierung in der Arbeitsstellung verhindert.

Darüber hinaus sind auch noch weitere Funktionsmerkmale unter Heranziehen des erfindungsgemäßen Sensors denkbar.

Außerdem ist es denkbar, das Anhängerpräsenzsignal des Sensors dahingehend auszunutzen, dem Benutzer des Kraftfahrzeugs einen vorhandenen Anhänger zu melden.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: eine schematische Ansicht von hinten eines ersten Ausführungsbeispiels einer erfindungsgemäßen Anhängevorrichtung;
- Fig. 2: einen Schnitt längs Linie 2-2 in Fig. 1;
- Fig. 3: eine Draufsicht auf das erste Ausführungsbeispiel der erfindungsgemäßen Anhängevorrichtung in Richtung des Pfeils A in Fig. 1;
- Fig. 4: eine schematische vergrößerte Darstellung des Bereichs B in Fig. 3;

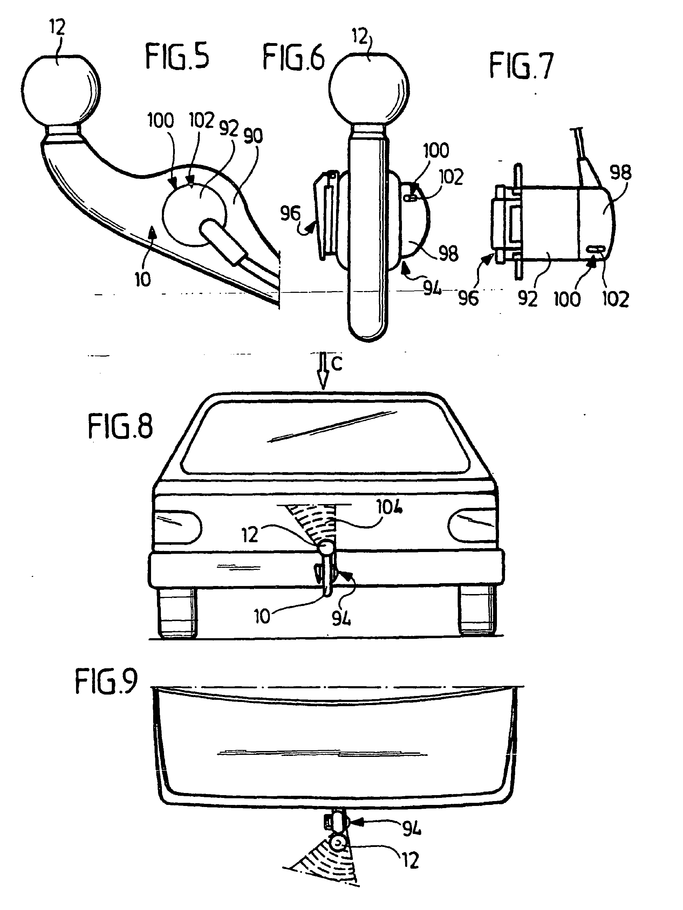

- Fig. 5: eine vergrößerte ausschnittsweise Darstellung des Kugelhalses des ersten Ausführungsbeispiels der erfindungsgemäßen Anhängevorrichtung entprechend Fig. 2;
- Fig. 6: eine vergrößerte ausschnittsweise Darstellung des Kugelhalses des ersten Ausführungsbeispiels entsprechend Fig. 1;
- Fig. 7: eine Darstellung einer in den Kugelhals integrierten Steckdose beim ersten Ausführungsbeispiel;
- Fig. 8: eine schematische Darstellung eines Erfassungsbereichs eines Sensors beim ersten Ausführungsbeispiel;
- Fig. 9: eine schematische Darstellung des Erfassungsbereichs des ersten Ausführungsbeispiels bei Blick in Richtung C in Fig. 8;
- Fig. 10: eine schematische Darstellung des Erfassungsbereichs in der Ansicht gemäß Fig. 2 bei einem an der Kupplungskugel angreifenden Kugelkupplungsstück eines Anhängers;
- Fig. 11: eine schematische Darstellung einer Einwirkung eines Fremdobjekts, beispielsweise eines Schuhs, auf die Kupplungskugel;
- Fig. 12: eine schematische Darstellung des Senders gemäß dem ersten Ausführungsbeispiel mit Darstellung des Erfassungsbereichs;
- Fig. 13: eine schematische Darstellung eines Zusammenwirkens des Sensors mit einer Sensorsteuerschaltung und einer Steuerung für die Anhängevorrichtung;
- Fig. 14: eine schematische Darstellung von Detektionszeitintervallen, detektierten Signalen und Zustandsintervallen beim ersten Ausführungsbeispiel;
- Fig. 15: einen Längsschnitt durch eine Steckdose mit Sensor beim ersten Ausführungsbeispiel;
- Fig. 16: eine Schaltskizze einer Variante des ersten Ausführungsbeispiels mit in einer Versorgung der Steckdose angeordnetem Sensor;
- Fig. 17: eine schematische Darstellung eines zweiten Ausführungsbeispiels;
- Fig. 18: eine schematische Darstellung eines Kugelhalses eines dritten Ausführungsbeispiels in der Ansicht gemäß Fig. 5;
- Fig. 19: eine schematische Darstellung des Kugelhalses des dritten Ausführungsbeispiels mit angreifendem Kugelkupplungsstück;
- Fig. 20: eine schematische Darstellung eines Kugelhalses eines vierten Ausführungsbeispiels in der Ansicht gemäß Fig. 5;
- Fig. 21: eine schematische Darstellung des Kugelhalses des vierten Ausführungsbeispiels mit angreifendem Kugelkupplungsstück;
- Fig. 22: eine ausschnittsweise Darstellung von Kupplungskugel und Kugelhals mit Sensor eines fünften Ausführungsbeispiels im Längsschnitt;
- Fig. 23: eine schematische Darstellung eines Längsschnitts von Kupplungskugel und Kugelhals des fünften Ausführungsbeispiels mit kraftbeaufschlagtem Sensor;
- Fig. 24: eine schematische Darstellung eines Kugelhalses eines sechsten Ausführungsbeispiels und
- Fig. 25: eine Draufsicht auf das sechste Ausführungsbeispiel in Richtung des Pfeils D in Fig. 24.

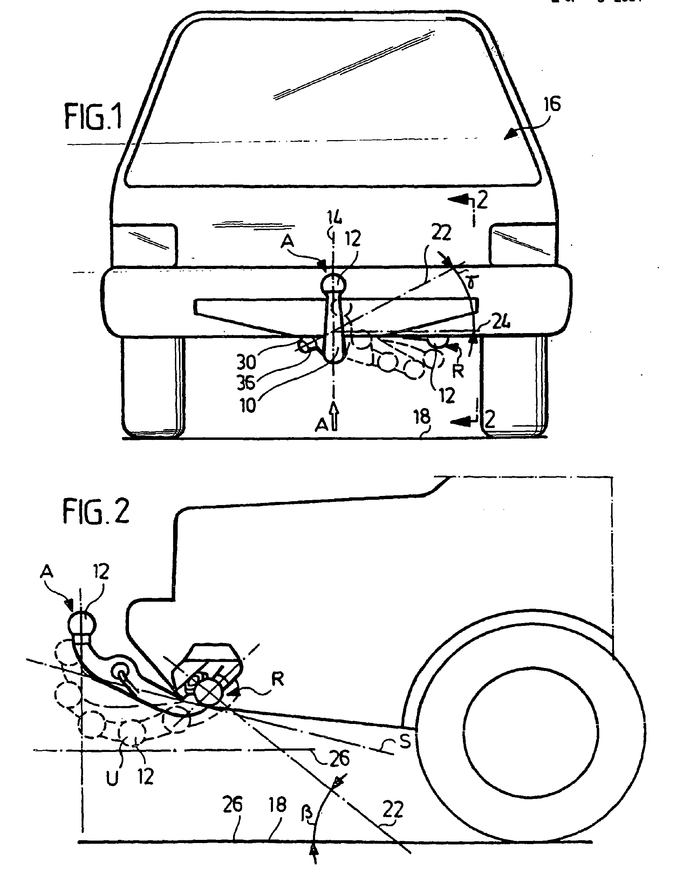

Eine in Fig. 1 dargestellte erfindungsgemäße Anhängevorrichtung umfaßt einen Kugelhals 10 mit einer Kupplungskugel 12, wobei der Kugelhals in einer Arbeitsstellung A sich in einer Längsmittelebene 14 eines Kraftfahrzeugs 16 erstreckt und die Kupplungskugel 12 auf einer einer Fahrbahn 18 abgewandten Seite des Kugelhalses 10 steht.

Dieser Kugelhals 10 ist bei dem ersten Ausführungsbeispiel der erfindungsgemäßen Anhängevorrichtung von einer Arbeitsstellung A in eine Ruhestellung R schwenkbar, wobei die Schwenkachse beliebig ausgerichtet sein kann.

Die Schwenkachse kann senkrecht zur Längsmittelebene 14 in horizontaler Richtung verlaufen, die Schwenkachse kann in der Längsmittelebene 14 in ungefähr vertikaler Richtung verlaufen.

Bei dem ersten Ausführungsbeispiel ist, wie in Fig. 1, 2 und 3 dargestellt, die mit 22 bezeichnete Schwenkachse in einem Winkel α gegenüber der Längsmittelebene 14 des Kraftfahrzeugs 16 verlaufen zu lassen, wobei der Winkel α im Bereich von ungefähr 40° bis ungefähr 70° liegt und die Schwenkachse 22 in einem Winkel β relativ zur in der Längsmittelebene 14 liegenden Horizontalen 26 verlaufen zu lassen, wobei der Winkel β im Bereich von ungefähr 30° bis ungefähr 50° liegt, und außerdem die Schwenkachse 22 in einem Winkel γ gegenüber einer senkrecht auf der Längsmittelebene 14 stehenden Horizontalen 24 verlaufen zu lassen, wobei der Winkel γ im Bereich von ungefähr 20° bis ungefähr 40° liegt.

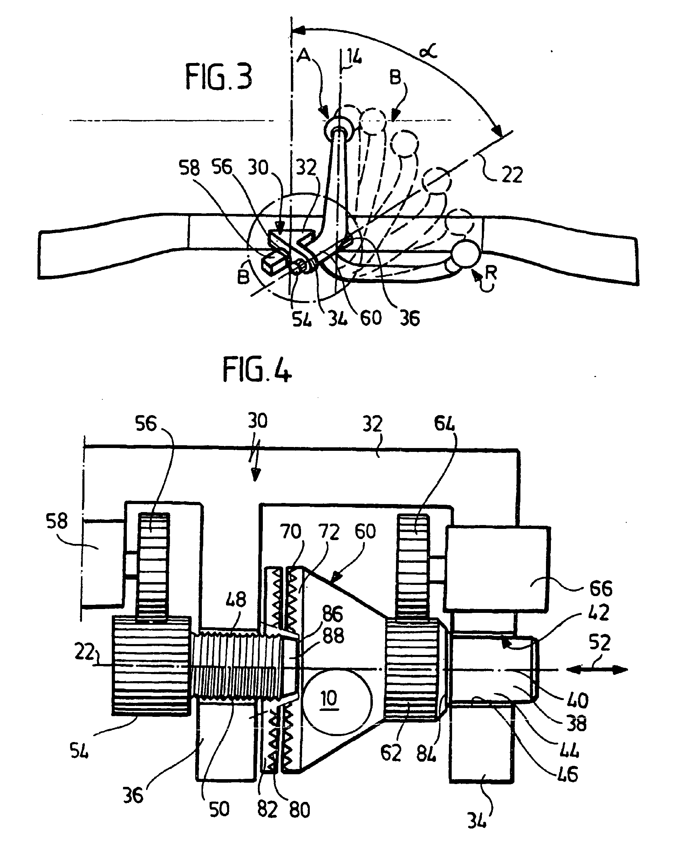

Das erste Ausführungsbeispiel einer erfindungsgemäßen Anhängekupplung, dargestellt in Fig. 3 und 4, umfaßt nun zur drehbaren Lagerung des Kugelhalses 10 um die Schwenkachse 22 einen Schwenklagerkörper 30, welcher beispielsweise eine Basis 32 und zwei von der Basis 32 abstehende Lagerwangen 34 und 36 umfaßt.

In den Lagerwangen 34 und 36 ist ein Lagerzapfen 38 um seine Achse 40 drehbar gelagert, wobei die Achse 40 die Schwenkachse 22 für den Kugelhals 10 darstellt.

Dabei erfolgt die Lagerung des Lagerzapfens 38 in der Lagerwange 34 beispielsweise mittels eines Gleitlagers 42, gebildet durch eine Umfangsfläche 44 des Lagerzapfens 38 und eine Lagerbohrung 46 in der Lagerwange 34.

Ferner trägt der Lagerzapfen 38 in seinem die Lagerwange 36 durchsetzenden Abschnitt ein Außengewinde 48, welches in ein Innengewinde 50 in der Lagerwange 36 eingreift, so daß ein Drehen des Lagerzapfens 38 dazu führt, daß sich aufgrund der ineinandergreifenden Gewinde 48 und 50 der Lagerzapfen 40 in einer Richtung 52 parallel zur Achse 40 relativ zu den Lagerwangen 34 und 36 verschieben läßt.

Zum drehbaren Antrieb des Lagerzapfens 38 ist dieser auf einer der Lagerwange 34 gegenüberliegenden Seite der Lagerwange 36 mit einem Antriebsritzel 54 versehen, in welches ein Ritzel 56 eingreift, das durch einen Antrieb 58 antreibbar ist, wobei der Antrieb 58 vorzugsweise einen Elektromotor mit einem Untersetzungsgetriebe umfaßt.

Auf dem Lagerzapfen 38 sitzt zwischen der Lagerwange 34 und der Lagerwange 36 ein als Ganzes mit 60 bezeichnetes Schwenkelement, welches drehfest mit einem Schwenkritzel 62 verbunden ist, das seinerseits durch ein Ritzel 64 antreibbar ist, um eine Schwenkbewegung des Schwenkelements 60 um die Schwenkachse 62 einzuleiten. Hierzu ist das Ritzel 64 durch einen Schwenkantrieb 66 angetrieben, welcher vorzugsweise ebenfalls einen Elektromotor mit einem Untersetzungsgetriebe umfaßt.

Ferner trägt das Schwenkelement 60 auf seiner der Lagerwange 36 zugewandten Seite einen mit ersten Formschlußelementen 70 versehenen Träger 72, welcher im einfachsten Fall als Verzahnungsring ausgebildet und konzentrisch zur Achse 40 des Lagerzapfens 38 angeordnet ist.

Der Träger 72 ist dabei drehfest und in Richtung 52 unverschieblich mit dem Schwenkelement 60 verbunden, an welches außerdem der Kugelhals 10 angeformt ist.

Im einfachsten Fall sind der Kugelhals 10, das Schwenkelement 60 und der Träger 72 mit den ersten Formschlußelementen 70 als einstückiges Teil ausgebildet.

Ferner ist an der Lagerwange 36, und zwar auf ihrer dem Träger 72 mit den ersten Formschlußelementen 70 zugewandten Seite, ein zweite Formschlußelemente 80 aufweisender Träger 82 angeordnet, wobei die zweiten Formschlußelemente 80 den ersten Formschlußelementen 70 zugewandt sind und die ersten Formschlußelemente 70 und die zweiten Formschlußelemente 80 so ausgebildet sind, daß diese eine formschlüssige und spielfreie Verbindung miteinander eingehen können, um das Schwenkelement 60 spielfrei drehfest relativ zur Lagerwange 36 festzulegen.

Beispielsweise ist der Träger 82 als separates Teil ausgebildet, welches drehfest und in Richtung 52 unverschieblich mit der Lagerwange 36 verbunden ist. Es ist aber auch denkbar, den zweiten Träger 82 mit den zweiten Formschlußelementen 80 einstückig an die Lagerwange 36 anzuformen.

Außerdem ist der Lagerzapfen 38 auf einer dem Schwenkritzel 62 zugewandten Seite mit einer Schulter 84 versehen, welche in der Lage ist, das Schwenkritzel 62 zusammen mit dem Schwenkelement 60 in Richtung der Lagerwange 36 zu verschieben.

Darüber hinaus ist der Lagerzapfen 38 noch ferner mit einer Schulter 86 versehen, welche beispielsweise durch einen aufgesetzten Ring 88 gebildet ist und dazu dient, das Schwenkelement 60 in Richtung der Lagerwange 34 zu verschieben.

Somit sind das Schwenkelement 60 und das Schwenkritzel 62 gemeinsam zwar drehbar, jedoch in Richtung 52 im wesentlichen unverschieblich auf dem Lagerzapfen 38 gelagert.

Zum drehfesten Festlegen der jeweiligen Schwenkstellung des Schwenkelements 60 relativ zur Lagerwange 36 und somit relativ zum Kraftfahrzeug wird nun der Antrieb 58 in Gang gesetzt, welcher über das Ritzel 56 das Antriebsritzel 54 antreibt und somit in der Lage ist, den Lagerzapfen 38 in Richtung 52 zu verschieben, und zwar entweder so, daß die Formschlußelemente 70 und 80 miteinander in Eingriff kommen, oder so, daß diese außer Eingriff kommen, wobei stets das Ritzel 64 und das Schwenkritzel 62 in Eingriff bleiben.

Sind die Formschlußelemente 70 und 80, wie in Fig. 4 dargestellt, außer Eingriff, so besteht die Möglichkeit, über den Schwenkantrieb 66 und -das Ritzel 64 das Schwenkritzel 62 anzutreiben und somit das Schwenkelement 60 mitsamt dem Kugelhals 10 von der Arbeitsstellung A in die Ruhestellung R oder umgekehrt zu verschwenken, wobei die Arbeitsstellung A und die Ruhestellung R beispielsweise durch Endschalter erfassbar sind, so daß bei Erreichen der jeweiligen Stellung ein Stillsetzen des Schwenkantriebs 66 und somit ein Festhalten der Schwenkstellung erfolgen kann.

Je nach dem ob der Kugelhals 10 in der Arbeitsstellung A oder in der Ruhestellung R steht, besteht nun durch Betätigen des Antriebs 58 die Möglichkeit, die Formschlußelemente 70 und 80 miteinander in Eingriff zu bringen, wobei der Lagerzapfen 38 das Schwenkritzel 62 und das Schwenkelement 60 in Richtung der Lagerwange 36 beaufschlagt und diese soweit in Richtung der Lagerwange 36 schiebt, bis die ersten Formschlußelemente 70 spielfrei in die zweiten Formschlußelemente 80 eingedrückt sind.

Damit ist das Schwenkelement 60 mitsamt den Trägern 72 und 82 und den Formschlußelementen 70 und 80 gegen die Lagerwange 36 verspannt, wobei der Lagerzapfen 38 seinerseits durch das Außengewinde 48 in Richtung 52 in dem Innengewinde 50 in der Lagerwange 36 fixiert ist und somit dazu dient, die in axialer Richtung 52 desselben wirksamen Zugkräfte aufzubringen und damit eine spielfreie Fixierung des Schwenkelements 60 durch Verspannen gegen die Lagerwange 36 erreicht.

Bei der erfindungsgemäßen Anhängevorrichtung ist vorzugsweise der Kugelhals 10 in einem Bereich zwischen der Kupplungskugel 12 und dem Schwenklagerkörper 30 mit einer Aufnahme 90 für ein Gehäuse 92 einer als Ganzes mit 94 bezeichneten Steckdose versehen, wobei das Gehäuse 92 auf einer Seite mit einem Deckel 96 versehen ist und auf einer gegenüberliegenden Seite mit einer Abschlußkappe 98.

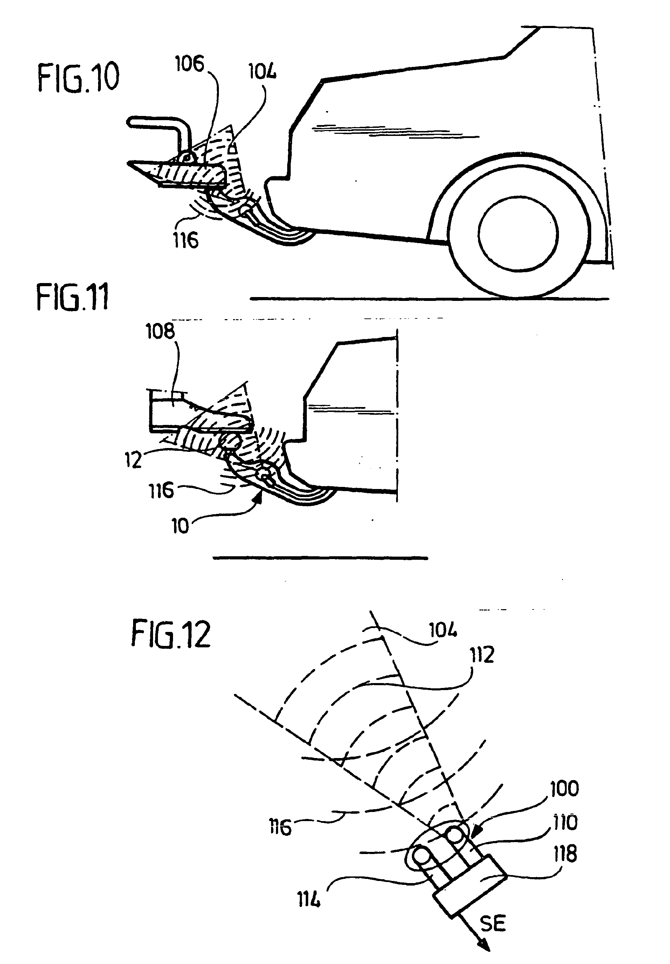

Vorzugsweise ist in der Abschlußkappe 98 ein als Ganzes mit 100 bezeichneter berührungslos arbeitender Sensor vorgesehen, dessen Detektionsseite 102 der Kupplungskugel 12 zugewandt ist, so daß ein von der Detektionsseite 102 ausgehender Erfassungsbereich 104, wie in Fig. 8, 9 und 10 dargestellt, die Kupplungskugel 12 zu wesentlichen Teilen erfaßt, und zwar vorzugsweise so, daß mindestens auf der Hälfte der Oberfläche der Kupplungskugel 12 erkennbar ist, ob auf dieser, wie in Fig. 10 dargestellt, ein Kugelkupplungsstück 106 eines Anhängers angreift und die Kupplungskugel 12 in bekannter Weise umfaßt oder ob die Kupplungskugel 12 anderweitig beaufschlagt ist, beispielsweise durch einen Schuh 108 oder ein anderes Objekt. (Fig. 11)

Hierzu umfaßt der Sensor 100, wie in Fig. 12 dargestellt, einen Sender 110, welcher in dem beispielsweise kegelförmigen Erfassungsbereich 104 sich in Luft ausbreitende Ultraschallwellenimpulspakete 112 aussendet, während ein außerdem im Sensor 100 vorgesehener Detektor 114 reflektierte, rücklaufende Ultraschallwellenimpulspakete 116 detektiert.

Ferner umfaßt der Sensor 100 weiter eine Auswerteelektronik 118, welche durch Auswertung des vom Detektor 114 erzeugten Signals in Relation zur Aktivität des Senders 110 in der Lage ist, festzustellen, ob die Kupplungskugel 12, wie in Fig. 8, 9 dargestellt, frei von äußerer Einwirkung ist oder ob an dieser das Kugelkupplungsstück 106 oder der Gegenstand 108 angreifen, da sich durch ein an der Kupplungskugel 12 angreifendes Objekt die Laufzeit der reflektierten Ultraschallwellenimpulspakete 116, die auf den Detektor 114 auftreffen, ändert.

Aufgrund der sich veränderten Laufzeit der reflektierten Ultraschallwellenimpulspakete 116 ist die Auswerteelektronik 118 in der Lage, ein Detektorsignal SE abzugeben, welches die vorhandene oder nicht vorhandene Einwirkung auf die Kupplungskugel 12 meldet.

Alternativ dazu besteht die Möglichkeit, als Sender 110 einen Ultraschallwandler einzusetzen, der zum Senden der Ultraschallwellenimpulspakete 112 als Sender und zum Detektieren der rückreflektierten Ultraschallwellenimpulspakete 116 als Detektor betreibbar ist.

Alternativ zum Vorsehen eines Ultraschallwellen 112 aussendenden Senders 110 und eines Ultraschallwellen 116 detektierenden Detektors 114 ist es ebenfalls denkbar, Infrarotstrahlung mit einem entsprechenden Sender 110 auszusenden und die Infrarotstrahlung mit einem entsprechend anderen Detektor 114 zu detektieren oder Radarwellen auszusenden und diese zu detektieren.

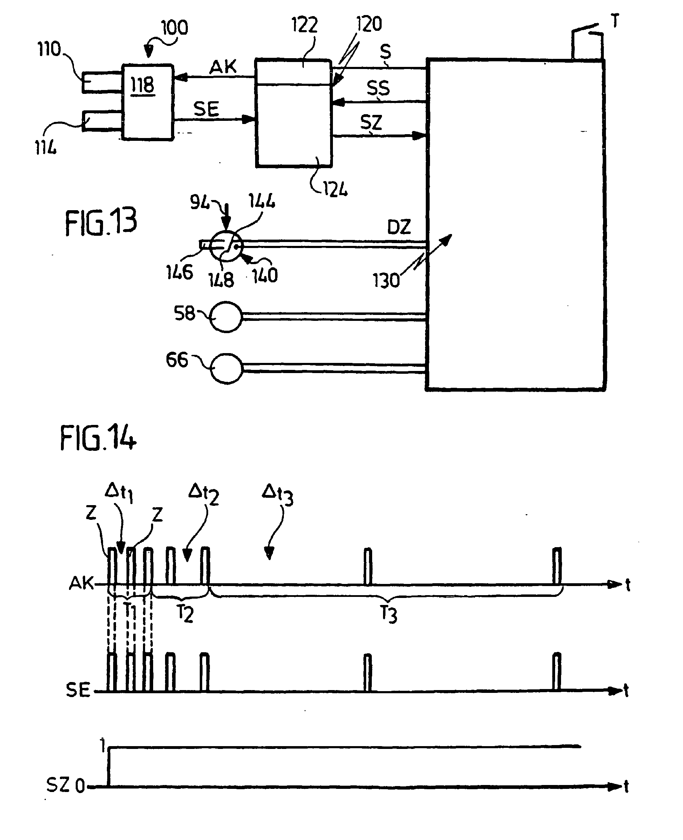

Die Auswerteelektronik 118 ist, wie in Fig. 13 dargestellt, mit einer Sensorsteuerschaltung 120 verbunden, welche den Sensor 100 betreibt und hierfür beispielsweise ein den Sensor 100 aktivierendes Signal AK der Auswerteelektronik 118 dann übermittelt, wenn der Sensor 100 überprüfen soll, ob die Kupplungskugel 12 durch einen Gegenstand beaufschlagt ist oder nicht.

Die Sensorsteuerschaltung 120 ist dabei in der Lage, während definierter Detektionszeitintervalle Z mit dem Signal AK den Sender 100 zu aktivieren, so daß beispielsweise während der definierten Detektionszeitintervalle Z der Sender 110 die Ultraschallwellen 112 aussendet.

Je nach dem, ob die Kupplungskugel durch einen Gegenstand beaufschlagt ist oder nicht, ermittelt die Auswerteelektronik 118 aufgrund des vom Detektor 114 empfangenen Signals, ob die Kupplungskugel 12 durch ein Objekt beaufschlagt ist oder nicht. Ist dies der Fall, so erhält, wie exemplarisch in Fig. 14 dargestellt, die Sensorsteuerschaltung 120 stets dann das von 0 verschiedene Detektorsignal SE übermittelt, wenn sie ihrerseits mit dem Signal AK den Sensor 100 aktiviert.

Die Sensorsteuerschaltung 120 umfaßt ihrerseits eine Taktgeberstufe 122, welche Zeitintervalle Δt festlegt, die zwischen den einzelnen, aufeinanderfolgenden, während der Detektionszeitintervalle Z existenten Signale AK liegen.

Dabei sind die Zeitintervalle Δt mit unterschiedlicher Länge einstellbar.

Ist die Sensorsteuerschaltung 120 beispielsweise mittels eines Startsignal S aktiviert worden, so geht sie in ihren aktiven Zustand oder Mode über und in diesem generiert die Taktgeberstufe 122 die Signale AK mit zwischen diesen liegenden Zeitintervallen Δt₁, die die kürzest möglichen sind.

Nach Ablauf eines gewissen, jedoch festlegbaren Zeitraum T1 ändert die Taktgeberstufe 122 jedoch die Zeitintervalle Δt zu größeren Werten, so daß diese nunmehr die Signale AK mit zwischen diesen liegenden Zeitintervallen Δt₂ abgibt, wobei diese Zeitintervalle Δt₂ größer sind als die Zeitintervalle Δt₁.

Dies erfolgt während eines Zeitraums T₂.

Sobald die Zeiträume T₁ und T₂ verstrichen sind, ändert die Taktgeberstufe 122 nochmals die Zeitintervalle Δt zu noch größeren Werten, nämlich zu den Werten Δt₃ und sendet somit während eines Zeitraums T₃ die Signale AK in noch größeren Zeitabständen zum Sensor 100.

Damit wird insgesamt nach einem Startsignal S während des ersten Zeitraums T₁ die Kupplungskugel 12 sehr häufig durch den Sensor 100 überprüft, während der Häufigkeit der Überprüfungen der Kupplungskugel 12 während des Zeitraums T₂ geringer wird und während des Zeitraums T₃ noch geringer wird.

Nach Verstreichen des Zeitraums T₃ gibt die Taktgeberstufe 122 keine Signale AK mehr ab und somit geht die Taktgeberstufe 122 der Sensorsteuerschaltung 120 in ihren inaktiven Zustand oder inaktiven Mode über.

Zusätzlich zur Taktgeberstufe 122 umfaßt die Sensorsteuerschaltung 120 auch noch eine Speicherstufe 124, welche, das von der Auswerteelektronik 118 abgegebene Detektorsignal SE so lange speichert, bis eine erneute Aktivierung des Sensors 100 mittels des Signals AK erfolgt ist und die Auswerteelektronik 118 durch das Signal SE anzeigt, ob die Kupplungskugel 12 durch ein Objekt, wie beispielsweise das Kugelkupplungsstück 106, beaufschlagt ist oder nicht.

Diese Speicherstufe 124 speichert jeweils den vom Sensor 100 erfaßten Einwirkungszustand bis zur erneuten Abfrage durch den Sensor 100, so daß, wie in Fig. 14 dargestellt, die Speicherstufe 124 in der Lage ist, ein Anhängerpräsenzsignal SZ zu erzeugen, mittels welchem zu jedem Zeitpunkt t festgestellt werden kann, ob die Kupplungskugel 12 durch ein Objekt beaufschlagt ist oder nicht.

Dieses Anhängerpräsenzsignal SZ ist beispielsweise von einer Steuerung 130 der Anhängevorrichtung abfragbar, die damit in der Lage ist, zu entscheiden, ob überhaupt der Kugelhals 10 aus der Arbeitsstellung A herausgeschwenkt werden darf oder nicht.

Die Steuerung 130 umfaßt dabei beispielsweise einen Starttaster T, mit welchem eine Bewegung des Kugelhalses 10 zwischen der Arbeitsstellung A und der Ruhestellung R auslösbar ist. Das heißt, wenn der Taster T in der Ruhestellung R des Kugelhalses 10 gedrückt wird, erfolgt ein Verschwenken des Kugelhalses 10 von der Ruhestellung R in die Arbeitsstellung A, wird dagegen der Taster T in der Arbeitsstellung A gedrückt, so erfolgt ein Verschwenken des Kugelhalses 10 von der Arbeitsstellung A in die Ruhestellung R.

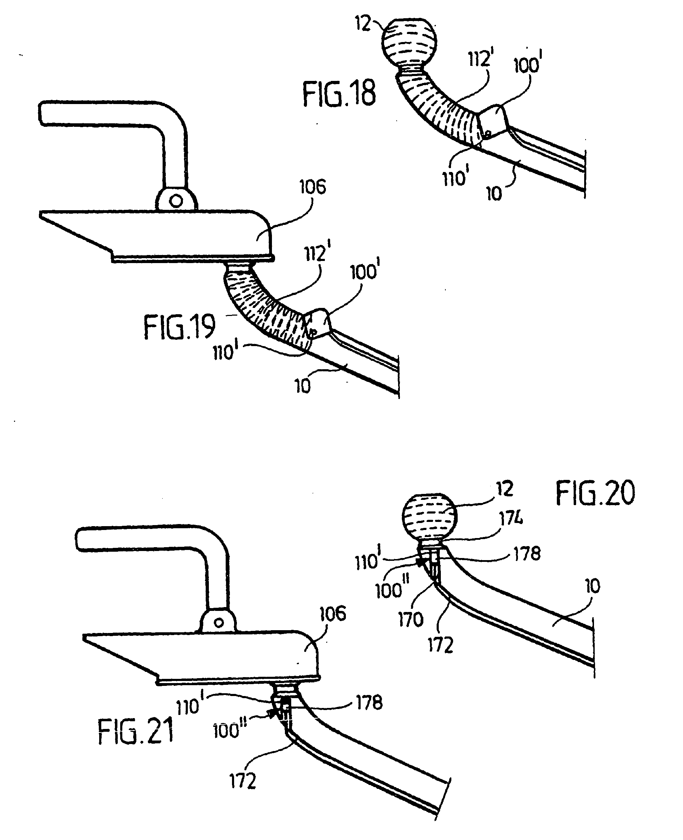

Steht beispielsweise der Kugelhals 10 in der Arbeitsstellung A und erfolgt eine Betätigung des Tasters T, so übermittelt die Steuerung 130 das Startsignal S der Taktgeberstufe 122, die dann während des Zeitraums T₁ zunächst mit kurzen Intervallen Δt₁ das Signal AK zur Aktivierung des Sensors 100 abgibt, und gleichzeitig das Signal SE des Sensors 100 speichert, so daß der Steuerung 130 das Anhängerpräsenzsignal SZ, welches den Einwirkungszustand der Kupplungskugel 12 anzeigt, zur Verfügung steht (Fig. 19).

Ist die Kupplungskugel 12 durch ein Objekt beaufschlagt, so erkennt die Steuerung 130 aufgrund des Zustands 1 des Anhängerpräsenzsignals SZ dies und verhindert ein Aktivieren des Antriebs 58 zum Lösen der Fixierung des Kugelhalses 10 in der Arbeitsstellung A und außerdem wird auch ein Ansteuern des Schwenkantriebs 66 zum Verschwenken des Kugelhalses 10 verhindert.

Nur für den Fall, daß die Steuerung 130 erkennt, daß das Anhängerpräsenzsignal SZ nach einem Betätigen des Tasters T Null ist, wird die Steuerung 130 zunächst den Antrieb 58 zum Lösen der Fixierung des Kugelhalses 10 in der Arbeitsstellung A ansteuern, dann noch mal das Zustandssignal SZ abfragen und erst dann, wenn sicher ist, daß die Kupplungskugel 12 nicht durch ein Objekt beaufschlagt ist, den Schwenkantrieb 66 ansteuern, um den Kugelhals 10 aus der Arbeitsstellung A in Richtung der Ruhestellung R zu verschwenken.

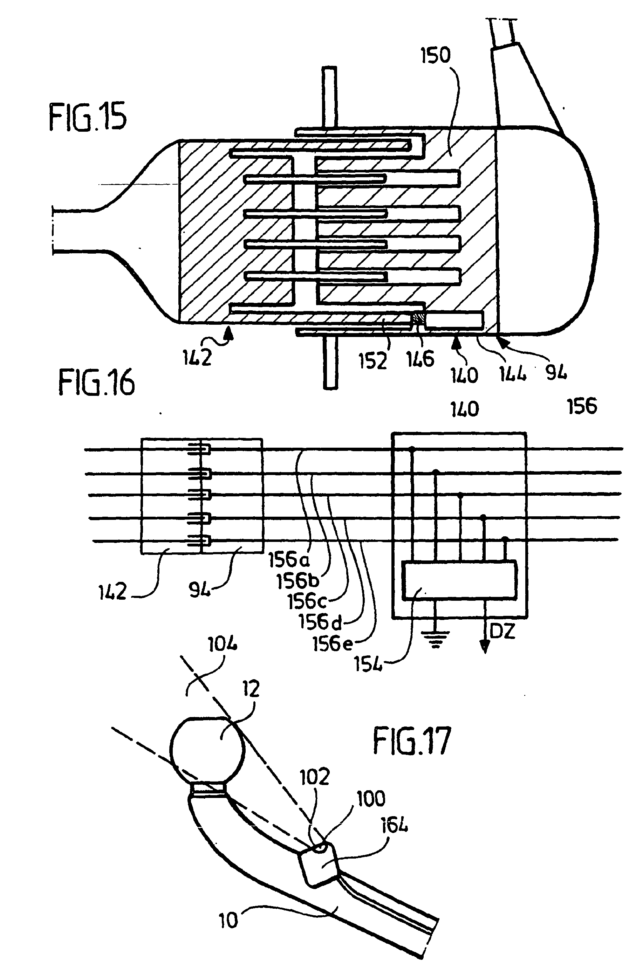

Ferner ist bei einer bevorzugten Variante des ersten Ausführungsbeispiels noch zusätzlich in der Steckdose 94 ein Sensor 140 vorgesehen, welcher überprüft, ob ein Stecker 142 eines Anhängers in die Steckdose 94 eingesteckt ist (Fig. 13 und 15).

Beispielsweise ist der Sensor 140 als Tastschalter 144 oder Taster ausgebildet, und es erfolgt beim Einstecken des Steckers 142 in die Steckdose 94 eine Betätigung einer Tastnase 146 des Tastschalters 144, welcher einen Schaltkontakt 148 schließt, der somit bei in die Steckdose 94 eingestecktem Stecker 142 der Steuerung 130 ein Anhängerpräsenzsignal DZ meldet. In diesem Zustand der Steckdose 94 kann parallel und unabhängig von der Beaufschlagung der Kupplungskugel 12 die Steuerung 130 hinsichtlich einer Aktivierung des Antriebs 58 oder des Schwenkantriebs 66 blockiert sein, vorzugsweise ist die Steuerung 130 hinsichtlich der Aktivierung des Antriebs 58 oder des Schwenkantriebs 66 blockiert.

Zweckmäßigerweise sitzt der Tastschalter 144 hierzu in einem Kontaktsockel 150 der Steckdose 94 und wird durch einen Vorsprung 152 des Steckers 142 beaufschlagt, wobei der Vorsprung 152, wie in Fig. 15 dargestellt, die äußere Hülse des Steckers 142 sein kann, es ist aber auch denkbar, als Vorsprung einen zusätzlichen Stift des Steckers 142 vorzusehen, welcher auf die Tastnase 146 einwirkt.

Alternativ dazu ist es auch denkbar, den Sensor 140 nicht als Tastschalter 144 auszubilden, sondern als Näherungsschalter, welcher den in die Steckdose 94 eingesteckten Stecker 142 berührungslos erkennt.

Bei einem weiteren Ausführungsbeispiel des Sensors 140 ist, wie in Fig. 16 dargestellt, der Sensor 140 als Erkennungsschaltung 154 für anhängeseitige elektrische Lasten ausgebildet, welche somit erkennt, ob aufgrund des in die Steckdose 94 eingesteckten Steckers 142 an den einzelnen elektrischen Kontakten die üblichen elektrischen Lasten, z. B. durch die Rückleuchten und Blinkleuchten, vorhanden sind.

Die Erkennungsschaltung 154 erzeugt das Anhängerpräsenzsignal DZ dann, wenn diese Lasten vorhanden sind, denn damit ist sichergestellt, daß nicht nur irgendein Stecker 142 in die Steckdose 94 eingesteckt ist, sondern der Stecker 142 tatsächlich mit den in einem Anhänger üblichen elektrischen Lasten verbunden ist.

Die Erkennungsschaltung 154 läßt sich besonders einfach dadurch realisieren, daß diese jede der Leitungen 156, die zur Steckdose 94 führen, anzapft und deren Widerstand gegen Masse mißt, der dann dem für die typische elektrische Last im Anhänger entsprechenden Widerstand entsprechen muß.

Vorzugsweise ist die Erkennungsschaltung 154 so geschaltet, daß sie bei bereits einer vorhandenen elektrischen Last zwischen einer der Leitungen 156 und Masse das Anhängerpräsenzsignal DZ abgibt, so daß dieses Anhängerpräsenzsignal auch beispielsweise bei einer beschädigten Anhängerleuchte abgegeben wird.

Der als Erkennungsschaltung 154 ausgebildete Sensor 140 kann an beliebiger Stelle einer Versorgung 158 der Anhängersteckdose 94 angeordnet sein und muß somit nicht zwingend in der Anhängersteckdose 94 selbst angeordnet sein, wobei die Anordnung der Erkennungsschaltung 154 zwischen den mit den einzelnen Leitungen 156 verbundenen Schaltern zum Bestromen der verschiedenen Leitungen 156 und der Steckdose 94 angeordnet sein muß.

Darüber hinaus schaltet die Steuerung 130 die Sensorsteuerschaltung 120 und somit den Sensor 100 mittels eines Schaltsignals SS zumindest dann aus, wenn der Kugelhals 10 in der Ruhestellung R oder zumindest nahe der Ruhestellung R steht, um zu verhindern, daß beim Einfahren in die Ruhestellung R der Sensor 100 fälschlicherweise eine Beaufschlagung der Kupplungskugel 12 meldet, obwohl dies nicht der Fall ist, sondern lediglich der Erfassungsbereich 104 beispielsweise Karosserieteile oder andere Gegenstände auf dem Weg in die Ruhestellung erfaßt.

Die Sensorsteuerschaltung 120 und somit auch der Sensor 100 werden durch das Schaltsignal SS zumindest dann eingeschaltet, wenn der Kugelhals 10 in der Arbeitsstellung A steht. Es ist aber auch möglich, die Sensorsteuerschaltung 120 bereits in allen Stellungen des Kugelhalses einzuschalten, die nahe der Arbeitsstellung A sind oder die zwischen einer unteren Totpunktstellung U der Kupplungskugel 12, in welcher diese der Fahrbahn 18 am nächsten kommt, und der Arbeitsstellung A liegen, so daß beispielsweise bereits beim Einschwenken in die Arbeitsstellung A erkannt werden kann, wenn das zum Ankoppeln des Anhängers bereitgestellte Kugelkupplungsstück 106 in den Bewegungsbereich der Kupplungskugel 12 kommt und die Kupplungskugel 12 beispielsweise mit diesem Kugelkupplungsstück 106 vor Erreichen der Arbeitsstellung A oder in der Arbeitsstellung A kollidieren würde.

Gleichzeitig mit dem Einschalten der Sensorsteuerschaltung 120 über das Schaltsignal SS durch die Steuerung 130 erfolgt auch die Übermittlung des Startsignals S an die Taktgeberstufe 122 der Sensorsteuerschaltung 120 und somit während des Zeitraums T₁ die häufige Aktivierung des Sensors 100 mit dem Signal AK, wobei sich die Häufigkeit, wie bereits beschrieben, ohne daß ein neues Startsignal S der Sensorsteuerschaltung 120 übermittelt wird, in den Zeiträumen T₂ und T₃ reduziert wird und nach dem Zeitraum T₃ die Überwachung der Kupplungskugel 12 mittels des Sensors 100 durch Übergang der Sensorsteuerschaltung in den inaktiven Mode vollständig eingestellt wird.

Wird somit beispielsweise der Kugelhals 10 von der Ruhestellung R in die Arbeitsstellung A verschwenkt, so erfolgt spätestens bei Erreichen der Arbeitsstellung A durch das Startsignal S ein Starten der Sensorsteuerschaltung 120 und, da davon auszugehen ist, daß innerhalb einer nennenswert kurzen Zeit ein Anhängen eines Anhängers durch Aufsetzen des Kugelkupplungsstücks 106 auf die Kupplungskugel 12 erfolgt, erfolgt ein häufiges Aktivieren des Sensors 100 mittels des Signals AK.

Wird dabei festgestellt, daß das Kugelkupplungsstück 106 aufgesetzt ist, so speichert die Speicherstufe 124 das dem aufgesetzten Kugelkupplungsstück 106 entsprechende Detektionssignal SE, so daß der Steuerung 130 stets das Zustandssignal SZ gleich 1 gemeldet wird, welches dokumentiert, daß ein Gegenstand auf die Kupplungskugel 12 einwirkt.

Da die Speicherstufe 124 der Sensorsteuerschaltung 120 dieses Zustandssignal SZ so lange hält, bis der Sensor 100 wiederum detektiert, daß kein Objekt auf die Kupplungskugel 12 einwirkt, ist für alle späteren Zeiten bis zum Lösen des Kugelkupplungsstücks 106 von der Kupplungskugel 12 die Steuerung 130 in einem Zustand, in welchem keinerlei Aktivierung des Antriebs 58 oder des Schwenkantriebs 66 erfolgen kann.

Bei der durch die Merkmale des Anspruchs 1 angegebenen erfindungsgemäßen Lösung ist das Startsignal S nicht zwingend an das Signal des Tasters T oder das Erreichen der Arbeitsstellung gekoppelt, sonder das Signal S kann beispielsweise auch durch erneutes Starten des Kraftfahrzeugs oder bestimmte Fahrzustände, das heißt beispielsweise ein Rückwärtsfahren des Kraftfahrzeugs, der Sensorsteuerschaltung 120 übermittelt werden, um ein Überprüfen einer möglichen Einwirkung auf die Kupplungskugel 12 zu veranlassen.

Bei einer Variante des ersten Ausführungsbeispiels kann der Sensor 100 anstatt mit Ultraschall zu arbeiten, auch mit Infrarotstrahlung arbeiten und somit Infrarotstrahlung aussenden und die rückreflektierte Infrarotstrahlung, insbesondere die aus dem Bereich der Kupplungskugel 12 rückreflektierte Infrarotstrahlung detektieren.

In diesem Fall ist somit der Sender 110 ein Infrarotsender und der Detektor 114 ein Infrarotdetektor.

Ferner ist es auch denkbar, den Sensor 100 als Radarsensor auszubilden, der elektromagnetische Wellen im Frequenzbereich von Radar aussendet und empfängt.

Alternativ zum ersten Ausführungsbeispiel ist es, wie in Fig. 17 dargestellt, bei einem zweiten Ausführungsbeispiel denkbar, den Kugelhals 10 auch ohne Steckdose 94 zu versehen und auf diesen ein Sensorgehäuse 164 aufzusetzen, in welchem der Sensor 100 angeordnet ist.

Ein derartiges Sensorgehäuse 164 läßt sich vorzugsweise so plazieren, daß der Erfassungsbereich 104 einen dem Kraftfahrzeug 16 zugewandten Oberflächenbereich der Kupplungskugel 12 im wesentlichen vollständig überprüfen kann.

Bei einem dritten Ausführungsbeispiel einer erfindungsgemäßen Anhängevorrichtung, dargestellt in Fig. 18 und 19, ist der Sender 110' des Sensors 100' in eine Öffnung des Kugelhalses 10 eingesetzt und erzeugt durch Ankopplung an den Kugelhals 10 im Kugelhals 10 Körperschall mit Ultraschallwellen 112', welche sich in Richtung der Kupplungskugel 12 ausbreiten, wobei das gekoppelte System aus Sender 110', Kugelhals 10 und Kupplungskugel 12 im Bereich seiner Resonanzfrequenz betrieben wird, dabei werden Amplitude und Frequenz der Ultraschallwellen des Körperschalls detektiert, deren Intensität und/oder Frequenz sich ändert, wenn auf der Kupplungskugel das Kugelkupplungsstück 106 aufsitzt oder ein übriges Objekt einwirkt.

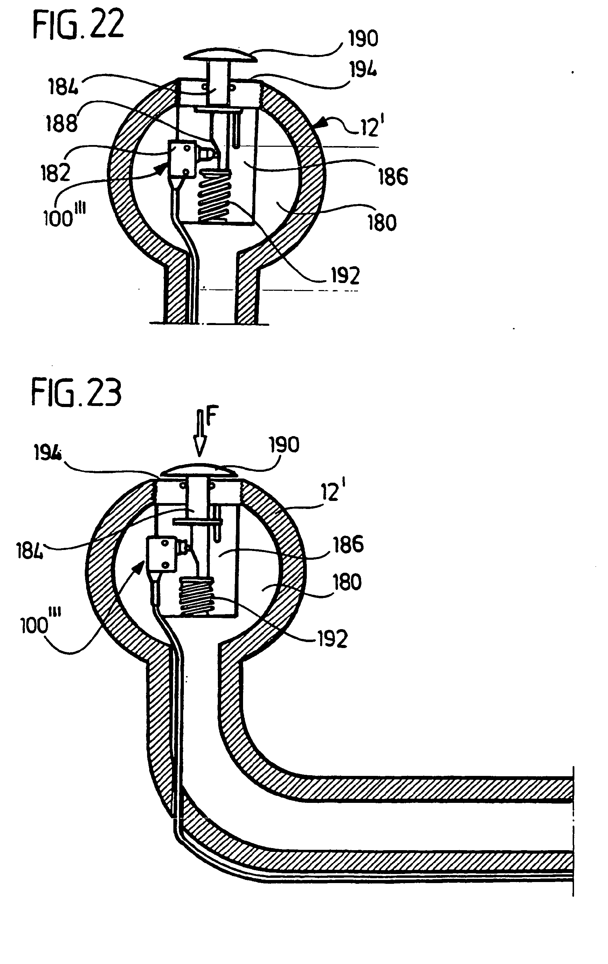

Bei einem vierten Ausführungsbeispiel, dargestellt in Fig. 20 und Fig. 21, ist der Sensor 100" in einer Bohrung 170 im Kugelhals 10 angeordnet, welche von einer Unterseite 172 des Kugelhalses 10 koaxial zur Kupplungskugel 12 in diesen eingeführt ist und beispielsweise vor einer an die Kupplungskugel 12 angrenzenden Einschnürung 174 endet, so daß im Bereich der Einschnürung 174 und der Kupplungskugel 12 keine Schwächung des Materials erfolgt.

In dieser Bohrung 170 sitzt dabei möglichst nahe der Kupplungskugel 12 der Sensor 100", welcher einen Ultraschallwandler 110' umfaßt, der von einer Ansteuerschaltung 178 bei einer Resonanzfrequenz des gekoppelten Systems aus Ultraschallwandler 110' und angekoppelter Umgebung betrieben wird, wobei die detektierte Resonanzfrequenz des Wandlers 176 von der angrenzenden Umgebung, d. h. dem umgebenden Abschnitt des Kugelhalses 10 und der Kupplungskugel 12, abhängt, da sich in diesen die Ultraschallwellen des Ultraschallwandlers 110' ausbreiten.

Greift nun an der Kupplungskugel 12 das Kugelkupplungsstück 106 des Anhängers an, so werden die Resonanzverhältnisse des Wandlers 110' geändert, wobei entweder eine Veränderung der Lage der Resonanzfrequenz oder eine Veränderung der Resonanzamplitude, in vielen Fällen eine Veränderung von beiden, eintritt, und diese Veränderung führt zur Erzeugung des Detektorsignals SE, das dann nachfolgend in gleicher Weise weiterbehandelt wird wie das Detektorsignal SE des Sensors 100.

Im übrigen ist das Funktionsprinzip des dritten und vierten Ausführungsbeispiels mit denen der voranstehenden Ausführungsbeispiele vergleichbar, so daß auf die Ausführungen zur Funktion im Detail vollinhaltlich auf die Ausführungen zu den voranstehenden Ausführungsbeispielen Bezug genommen werden kann.

Bei einem fünften Ausführungsbeispiel, dargestellt in Fig. 22 und Fig. 23 ist die Kupplungskugel 12' hohl ausgebildet, wobei in einem inneren Hohlraum 180 der Kupplungskugel 12 ein Sensor 100"' vorgesehen ist, der mit einem Tastschalter 182 eine Position eines Taststößels 184 erfaßt, welcher beispielsweise in einer Führung 186 im Hohlraum 180 geführt ist und eine Kurvenbahn 188 aufweist, welche abhängig von der Stellung des Taststößels 184 in unterschiedlicher Weise auf den Tastschalter 182 wirkt, das heißt beispielsweise den Tastschalter 182 dann beaufschlagt, wenn der Taststößel 184, wie in Fig. 23 dargestellt, durch eine Kraft F beaufschlagt ist, die beispielsweise durch ein auf die Kupplungskugel 12' aufgesetztes Kugelkupplungsstück 106 erzeugt wird.

Vorzugsweise hat der Taststößel 184 einen gewölbten Kopf 190, welcher näherungsweise an eine Außenkontur der Kupplungskugel 12 angepaßt ist und mittels einer Feder 192 von einer Oberseite 194 der Führung 186 abgehoben gehalten wird, solange die Kraft F nicht wirksam ist. Bei wirksamer Kraft F wird der Kopf 190 in Richtung der Oberseite 194 der Führung 186 gedrückt und somit bewirkt die Kurvenbahn 188 eine Betätigung des Tastsensors 100"', welcher dann seinen Schaltzustand gegenüber der nicht betätigten Stellung des Taststößels 184 geändert hat.

Bei dem fünften Ausführungsbeispiel der erfindungsgemäßen Anhängevorrichtung kann die Sensorsteuerschaltung 120 entfallen, da der Tastsensor 100" stets eindeutig und leistungslos einen Schaltzustand melden kann, welcher der Beaufschlagung oder Nichtbeaufschlagung der Kupplungskugel 12' entspricht, so daß der Tastsensor 100"' unmittelbar das Anhängerpräsenzsignal SZ der Steuerung 130 zur Verfügung stellen kann.

Die mit dem Hohlraum 180 versehene Kupplungskugel 12' eignet sich aber auch zum Einbau eines an diese angekoppelten Ultraschallwandlers 110', welcher im Bereich der Resonanzfrequenz betrieben wird.

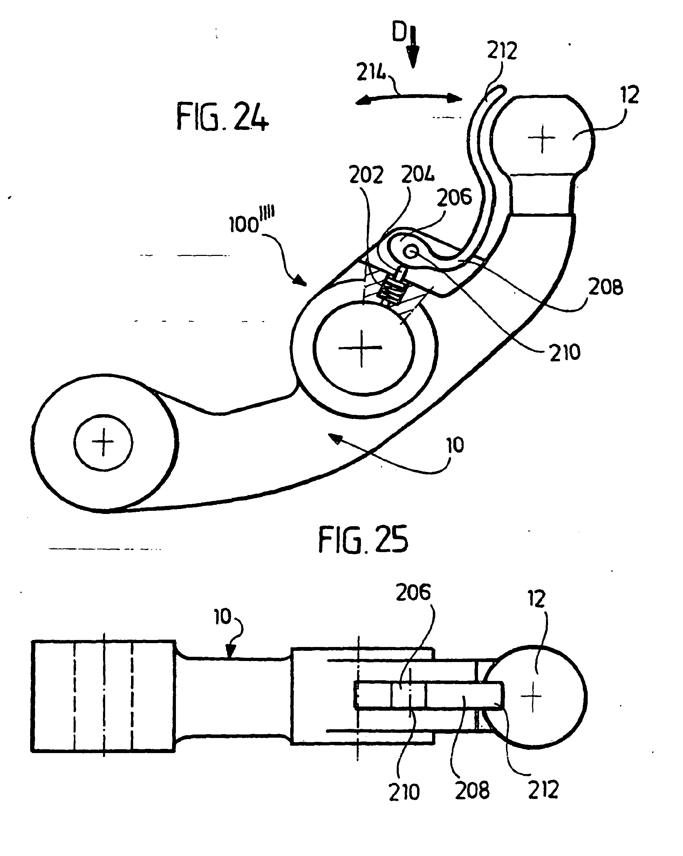

Bei einem sechsten Ausführungsbeispiel, dargestellt in Fig. 24 und 25, umfaßt der Sensor 100"" einen Tastschalter 202 mit einer Nase 204, welche durch einen Nocken 206 eines Detektorhebels 208 betätigbar ist, der seinerseits um eine Achse 210 schwenkbar am Kugelhals 10 gelagert ist.

Der Detektorhebel 208 ist so ausgebildet, daß er in einer ersten Stellung mit einem Endstück 212 nahe der Kupplungskugel 12 steht, beispielsweise in geringem Abstand von dieser oder an dieser anliegt, so daß in dieser ersten Stellung des Detektorhebels 208 an die Kupplungskugel 12 kein Kugelkupplungsstück 106 angreifen kann oder aufgesetzt werden kann.

Erst durch Verschwenken des Detektorhebels 208 in Richtung des Pfeils 214 in eine zweite Stellung ist das Ende 212 so weit von der Kupplungskugel 12 weg bewegbar, daß das Kugelkupplungsstück 106 aufgesetzt werden kann.

Der Nocken 206 ist nun so ausgebildet, daß er den Tastschalter 202 bei in der ersten Stellung stehendem Detektorhebel 208 nicht betätigt, während der Nocken 206 den Tastschalter 202 dann betätigt, wenn der Detektorhebel 208 in seiner zweiten Stellung steht, in welcher das Ende 212 von der Kupplungskugel 12 weg bewegt ist. In diesem Fall erzeugt der Tastschalter 202 in gleicher Weise wie der Tastschalter 182 unmittelbar das Anhängerpräsenzsignal SZ und stellt dieses der Steuerung 130 zur Verfügung.

Mit dem Detektorhebel 208 ist somit gleichzeitig sichergestellt, daß in der ersten Stellung für einen Benutzer sichtbar kein Anhänger angehängt werden kann und auch kein Anhänger angehängt sein kann, so daß auf einfache mechanische Art und Weise Fehlbedienungen vermieden werden können.

Vorzugsweise ist der Tastschalter 202 nahe der Steckdose 94 angeordnet, so daß in einfacher Weise über die Zuleitung zur Steckdose 94 auch die elektrische Abfrage des Tastschalters 202 erfolgen kann.

Es ist aber auch denkbar, den Tastschalter 202 in dem Gehäuse für die Steckdose unmittelbar unterzubringen und über einen zwischen diesem und dem Nocken 206 wirksamen Stößel den Tastschalter 202 zu betätigen.

Im übrigen wird auf die Auswertung Bezug genommen, die im Zusammenhang mit dem fünften und den vorangehenden Ausführungsbeispielen erläutert wurde.

## Patentansprüche

1. Anhängevorrichtung für Kraftfahrzeuge (16) umfassend einen an einer fahrzeugfesten Aufnahme (30) gehaltenen Kugelhals (10), der an seinem der Aufnahme (30) abgewandten Ende eine Kupplungskugel (12) trägt, einen Antrieb (66), mit welchem der Kugelhals (10) aus einer Arbeitsstellung (A) herausbewegbar ist,
**dadurch gekennzeichnet, daß** die Anhängevorrichtung mit mindestens einem ein Indiz für die Präsenz eines Anhängers erfassenden Sensor (100, 140) zum Erzeugen eines Anhängerpräsenzsignals versehen ist, daß eine Steuerung (130) vorgesehen ist, mit welcher der Antrieb (66) ansteuerbar ist, und daß die Steuerung (130) das Anhängerpräsenzsignal (SZ, DZ) des mindestens einen Sensors (100, 140) abfragt und bei Vorliegen des Anhängerpräsenzsignals (SZ, DZ) eine Bewegung des Kugelhalses (10) blockiert.

2. Anhängevorrichtung nach Anspruch 1, **dadurch gekennzeichnet, daß** die Steuerung (130) die Anhängerpräsenzsignale mehrerer Sensoren (100, 140) abfragt und bei Vorliegen bereits eines Anhängerpräsenzsignals (SZ, DZ) eine Bewegung des Kugelhalses (10) blockiert.

3. Anhängevorrichtung nach dem Oberbegriff des Anspruchs 1 oder nach einem der voranstehenden Ansprüche, **dadurch gekennzeichnet, daß** diese eine Fixiereinrichtung (58, 70, 80) aufweist, welche in einem Fixierzustand den Kugelhals (10) in einer Arbeitsstellung (A) festlegt und welche in einem Lösezustand den Kugelhals für eine Bewegung aus der Arbeitsstellung (A) freigibt.

4. Anhängevorrichtung nach Anspruch 3, **dadurch gekennzeichnet, daß** mit der Steuerung (130) eine Änderung des Zustands der Fixiereinrichtung (58, 70, 80) blockierbar ist.

5. Anhängevorrichtung nach Anspruch 4, **dadurch gekennzeichnet, daß** die Steuerung (130) bei Vorliegen des Anhängerpräsenzsignals (SZ, DZ) eine Änderung des Zustands der Fixiereinrichtung (58, 70, 80) blockiert.

6. Anhängevorrichtung nach einem der voranstehenden Ansprüche, **dadurch gekennzeichnet, daß** der Sensor (140) eine Anhängerstromversorgung überwacht und deren Existenz als Indiz für einen angehängten Anhänger wertet.

7. Anhängevorrichtung nach Anspruch 6, **dadurch gekennzeichnet, daß** der Sensor (140) einen in die Steckdose (94) eingesteckten Stecker (142) des Anhängers erkennt.

8. Anhängevorrichtung nach Anspruch 7, **dadurch gekennzeichnet, daß** der Sensor (140) einen Steckerkörper (152) des in die Steckdose (94) eingesteckten Steckers (142) erfaßt.

9. Anhängevorrichtung nach Anspruch 8, **dadurch gekennzeichnet, daß** der den Steckerkörper (152) erfassende Sensor (140) einen Tastschalter (144) umfaßt.

10. Anhängevorrichtung nach einem der Ansprüche 6 bis 9, **dadurch gekennzeichnet, daß** der Sensor (140) als eine elektrische Last des Anhängers erkennende Schaltung (154) ausgebildet ist.

11. Anhängevorrichtung nach Anspruch 10, **dadurch gekennzeichnet, daß** der Sensor (140) in eine Versorgung (158) für die Steckdose (94) integriert ist.

12. Anhängevorrichtung nach einem der voranstehenden Ansprüche, **dadurch gekennzeichnet, daß** der Sensor (100, 100', 100", 100"', 100"") die Kupplungskugel (12) überwacht und ein Angreifen eines Objekts (106, 108) an der Kupplungskugel (12) als Indiz für die Präsenz eines Anhängers wertet.

13. Anhängevorrichtung nach einem der voranstehenden Ansprüche, **dadurch gekennzeichnet, daß** der Sensor (100, 100"") im Bereich der Steckdose (94) angeordnet ist.

14. Anhängervorrichtung nach Anspruch 13, **dadurch gekennzeichnet, daß** der Sensor (100) in die Steckdose (94) integriert ist.

15. Anhängevorrichtung nach einem der voranstehenden Ansprüche, **dadurch gekennzeichnet, daß** der Sensor (100. 100', 100", 100"', 100"") am Kugelhals (10) angeordnet ist.

16. Anhängevorrichtung nach Anspruch 15, **dadurch gekennzeichnet, daß** der Sensor (100) in einem auf den Kugelhals (10) aufgesetzten Gehäuse (134) angeordnet ist.

17. Anhängevorrichtung nach Anspruch 15 oder 16, **dadurch gekennzeichnet, daß** der Sensor (100) im Bereich einer am Kugelhals (10) angeordneten Steckdose (94) angeordnet ist.

18. Anhängevorrichtung nach Anspruch 17, **dadurch gekennzeichnet, daß** der Sensor (100) in die Steckdose (94) integriert ist.

19. Anhängevorrichtung nach einem der voranstehenden Ansprüche, **dadurch gekennzeichnet, daß** der Sensor (100") im Kugelhals (10) angeordnet ist.

20. Anhängevorrichtung nach einem der voranstehenden Ansprüche, **dadurch gekennzeichnet, daß** der Sensor (100, 100"") über einen seitlich des Kugelhalses (10) in Richtung der Kupplungskugel (12) verlaufenden Erfassungsbereich die Kupplungskugel (12) erfaßt.

21. Anhängevorrichtung nach einem der Ansprüche 1 bis 19, **dadurch gekennzeichnet, daß** der Sensor (100', 100") das an der Kupplungskugel (12) angreifende Objekt (106, 108) über den sich zwischen dem Sensor (100', 100") und der Kupplungskugel (12) erstreckenden Abschnitt des Kugelhalses (10) detektiert.

22. Anhängevorrichtung nach einem der voranstehenden Ansprüche, **dadurch gekennzeichnet, daß** der Sensor (100"') in der Kupplungskugel (12) angeordnet ist.

23. Anhängevorrichtung nach Anspruch 22, **dadurch gekennzeichnet, daß** der Sensor (100"') einen einer Seite der Kupplungskugel (12) zugeordnete Erfassungsbereich aufweist.

24. Anhängevorrichtung nach einem der voranstehenden Ansprüche, **dadurch gekennzeichnet, daß** der Sensor (100",100" ") als durch Einwirkung betätigbarer Sensor arbeitet.

25. Anhängevorrichtung nach Anspruch 24, **dadurch gekennzeichnet, daß** der Sensor (100"') einen Taststößel (184) aufweist, dessen Stellungen erfaßbar sind.

26. Anhängevorrichtung nach Anspruch 24 oder 25, **dadurch gekennzeichnet, daß** der Sensor (100"") ein Detektorhebel (208) aufweist, dessen Stellungen erfaßbar sind.

27. Anhängevorrichtung nach einem der Ansprüche 24 bis 26, **dadurch gekennzeichnet, daß** der Sensor (100"', 100"") einen Schalter umfaßt.

28. Anhängevorrichtung nach einem der Ansprüche 1 bis 23, **dadurch gekennzeichnet, daß** der Sensor (100, 100', 100") berührungslos arbeitet.

29. Anhängevorrichtung nach Anspruch 28, **dadurch gekennzeichnet, daß** der Sensor (100) als optischer Sensor arbeitet.

30. Anhängevorrichtung nach Anspruch 28, **dadurch gekennzeichnet, daß** der Sensor (100) als Radarsensor arbeitet.

31. Anhängevorrichtung nach Anspruch 28, **dadurch gekennzeichnet, daß** der Sensor (100, 100', 100") als Ultraschallsensor arbeitet.

32. Anhängevorrichtung nach einem der voranstehenden Ansprüche, **dadurch gekennzeichnet, daß** der Sensor (100) einen Sender (110) und einen Detektor (114) umfaßt.

33. Anhängevorrichtung nach einem der Ansprüche 1 bis 31, **dadurch gekennzeichnet, daß** der Sensor (100, 100', 100") einen einzigen Wandler (110, 110') umfaßt.

34. Anhängevorrichtung nach Anspruch 33, **dadurch gekennzeichnet, daß** der Wandler (110) als Sender oder Empfänger betreibbar ist.

35. Anhängevorrichtung nach Anspruch 33, **dadurch gekennzeichnet, daß** der Wandler (110') bei einer Resonanzfrequenz von Wandler (110') und Umgebung (10, 12) betreibbar ist.

36. Anhängevorrichtung nach einem der voranstehenden Ansprüche, **dadurch gekennzeichnet, daß** das von dem Sensor (100, 100', 100", 100"', 100"") detektierbare Objekt ein Kugelkupplungsstück (106) ist.

37. Anhängevorrichtung nach einem der voranstehenden Ansprüche, **dadurch gekennzeichnet, daß** dem Sensor (100, 100', 100") eine Sensorsteuerschaltung (120) zugeordnet ist, welche den Sensor (100) während Detektionszeitintervallen (Z) aktiviert, den vom aktivierten Sensor (100) erfaßten Einwirkungszustand (SZ) speichert und anschließend den Sensor (100) deaktiviert.

38. Anhängevorrichtung nach Anspruch 37, **dadurch gekennzeichnet, daß** die Sensorsteuerschaltung (120) den vom aktivierten Sensor (100, 100', 100") erfaßten Einwirkungszustand (SZ) so lange speichert, bis eine erneute Aktivierung des Sensors (100) erfolgt.

39. Anhängevorrichtung nach Anspruch 37 oder 38, **dadurch gekennzeichnet, daß** die Sensorsteuerschaltung (120) nach einem festlegbaren Zeitintervall (Δt) den Sensor (100) selbständig erneut aktiviert und den von diesem erfaßten Einwirkungszustand (SZ) speichert.

40. Anhängevorrichtung nach Anspruch 39, **dadurch gekennzeichnet, daß** die Sensorsteuerschaltung (120) das Zeitintervall ((Δt) nach festlegbaren Zeiträumen (T) verändert.

41. Anhängevorrichtung nach Anspruch 39 oder 40, **dadurch gekennzeichnet, daß** die Sensorsteuerschaltung (120) nach Ablauf eines aktiven Modes in einen inaktiven Mode übergeht, in welchem keine selbständige Aktivierung des Sensors (100, 100', 100") mehr erfolgt.

42. Anhängevorrichtung nach einem der Ansprüche 39 bis 41, **dadurch gekennzeichnet, daß** die Sensorsteuerschaltung (120) das Zeitintervall (Δt) ereignisabhängig festlegt.

43. Anhängevorrichtung nach einem der voranstehenden Ansprüche, **dadurch gekennzeichnet, daß** der Kugelhals (10) mittels eines Antriebs (66) zwischen einer Arbeitsstellung (A) und einer Ruhestellung (R) bewegbar und in der Arbeitsstellung (A) mit der Fixiereinrichtung (58, 70, 80) festlegbar ist, daß eine Steuerung (130) vorgesehen ist, mit welcher die Bewegung und Fixierung steuerbar sind, und daß die Steuerung (130) das Anhängerpräsenzsignal (SZ,DZ) des mindestens einen Sensors (100, 100', 100", 100"', 100"") erfaßt und bei Vorliegen des Anhängerpräsenzsignals (SZ, DZ) ein Lösen der Fixierung in der Arbeitsstellung (A) nicht zuläßt.

## Claims

1. Trailer coupling apparatus for motor vehicles (16) comprising a ball neck (10), which is held on a vehicle-fixed holder (30) and which on its end remote from the holder (30) carries a coupling ball (12), an actuator (66), by which the ball neck (10) is movable out of an operating position (A),
**characterized in that** the trailer coupling apparatus is provided with at least one sensor (100, 140) for detecting an indication of the presence of a trailer and for generating a trailer presence signal, that a controller (130) is provided, by means of which the actuator (66) is controllable, and that the controller (130) interrogates the trailer presence signal (SZ, DZ) of the at least one sensor (100, 140) and, when the trailer presence signal (SZ, DZ) is present, blocks a movement of the ball neck (10).

2. Trailer coupling apparatus according to claim 1,
**characterized in that** the controller (130) interrogates the trailer presence signals of a plurality of sensors (100, 140) and, as soon as one trailer presence signal (SZ, DZ) is present, blocks a movement of the ball neck (10).

3. Trailer coupling apparatus according to the preamble of claim 1 or according to one of the preceding claims,
**characterized in that** it comprises a fixing device (58, 70, 80), which in a fixing state locks the ball neck (10) in an operating position (A) and which in a release state releases the ball neck for a movement out of the operating position (A).

4. Trailer coupling apparatus according to claim 3,
**characterized in that** by means of the controller (130) a change of state of the fixing device (58, 70, 80) is blockable.

5. Trailer coupling device according to claim 4,
**characterized in that** the controller (130), when the trailer presence signal (SZ, DZ) is present, blocks a change of state of the fixing device (58, 70, 80).

6. Trailer coupling apparatus according to one of the preceding claims, **characterized in that** the sensor (140) monitors a trailer power supply and evaluates the existence thereof as an indication of a coupled trailer.

7. Trailer coupling apparatus according to claim 6,
**characterized in that** the sensor (140) detects a connector (142) of the trailer that is plugged into the socket-outlet (94).

8. Trailer coupling apparatus according to claim 7,
**characterized in that** the sensor (140) senses a connector body (152) of the connector (142) plugged into the socket-outlet (94).

9. Trailer coupling apparatus according to claim 8,
**characterized in that** the sensor (140) sensing the connector body (152) comprises a momentary-contact switch (144).

10. Trailer coupling apparatus according to one of claims 6 to 9, **characterized in that** the sensor (140) is designed as a circuit (154), which detects an electric load of the trailer.

11. Trailer coupling apparatus according to claim 10,
**characterized in that** the sensor (140) is integrated into a supply (158) for the socket-outlet (94).

12. Trailer coupling apparatus according to one of the preceding claims, **characterized in that** the sensor (100, 100', 100", 100'", 100"") monitors the coupling ball (12) and evaluates an acting of an article (106, 108) upon the coupling ball (12) as an indication of the presence of a trailer.

13. Trailer coupling apparatus according to one of the preceding claims, **characterized in that** the sensor (100, 100"") is disposed in the region of the socket-outlet (94).

14. Trailer coupling apparatus according to claim 13,
**characterized in that** the sensor (100) is integrated into the socket-outlet (94).

15. Trailer coupling apparatus according to one of the preceding claims, **characterized in that** the sensor (100, 100', 100", 100'", 100"") is disposed on the ball neck (10).

16. Trailer coupling apparatus according to claim 15,
**characterized in that** the sensor (100) is disposed in a housing (134) mounted onto the ball neck (10).

17. Trailer coupling apparatus according to claim 15 or 16,
**characterized in that** the sensor (100) is disposed in the region of a socket-outlet (94) disposed on the ball neck (10).

18. Trailer coupling apparatus according to claim 17,
**characterized in that** the sensor (100) is integrated into the socket-outlet (94).

19. Trailer coupling apparatus according to one of the preceding claims, **characterized in that** the sensor (100") is disposed in the ball neck (10).

20. Trailer coupling apparatus according to one of the preceding claims, **characterized in that** the sensor (100, 100"") senses the coupling ball (12) over a sensing range extending laterally of the ball neck (10) in the direction of the coupling ball (12).

21. Trailer coupling apparatus according to one of claims 1 to 19, **characterized in that** the sensor (100', 100") detects the article (106, 108), which is acting upon the coupling ball (12), over the portion of the ball neck (10) extending between the sensor (100', 100") and the coupling ball (12).

22. Trailer coupling apparatus according to one of the preceding claims, **characterized in that** the sensor (100"') is disposed in the coupling ball (12).

23. Trailer coupling apparatus according to claim 22,
**characterized in that** the sensor (100"') has a sensing range associated with one side of the coupling ball (12) .

24. Trailer coupling apparatus according to one of the preceding claims, **characterized in that** the sensor (100"', 100"") operates as a sensor actuable by action.

25. Trailer coupling apparatus according to claim 24,
**characterized in that** the sensor (100"') comprises a feeler plunger (184); the positions of which are detectable.

26. Trailer coupling apparatus according to claim 24 or 25,
**characterized in that** the sensor (100"") comprises a detector lever (208), the positions of which are detectable.

27. Trailer coupling apparatus according to one of claims 24 to 26, **characterized in that** the sensor (100"', 100"") comprises a switch.

28. Trailer coupling apparatus according to one of claims 1 to 23, **characterized in that** the sensor (100, 100', 100") operates without contact.

29. Trailer coupling apparatus according to claim 28,
**characterized in that** the sensor (100) operates as an optical sensor.

30. Trailer coupling apparatus according to claim 28,
**characterized in that** the sensor (100) operates as a radar sensor.

31. Trailer coupling apparatus according to claim 28,
**characterized in that** the sensor (100, 100', 100") operates as an ultrasonic sensor.

32. Trailer coupling apparatus according to one of the preceding claims, **characterized in that** the sensor (100) comprises a transmitter (110) and a detector (114).

33. Trailer coupling apparatus according to one of claims 1 to 31, **characterized in that** the sensor (100, 100', 100") comprises a single transducer (110, 110').

34. Trailer coupling apparatus according to claim 33,
**characterized in that** the transducer (110) is operable as a transmitter or receiver.

35. Trailer coupling apparatus according to claim 33,
**characterized in that** the transducer (110') is operable with a resonant frequency of transducer (110') and environment (10, 12).

36. Trailer coupling apparatus according to one of the preceding claims, **characterized in that** the article detectable by the sensor (100, 100', 100", 100"', 100"") is a ball coupling piece (106).

37. Trailer coupling apparatus according to one of the preceding claims, **characterized in that** there is associated with the sensor (100, 100', 100") a sensor control circuit (120), which activates the sensor (100) during detection time intervals (Z), stores the influence state (SZ) sensed by the activated sensor (100) and then deactivates the sensor (100).

38. Trailer coupling apparatus according to claim 37,
**characterized in that** the sensor control circuit (120) stores the influence state (SZ) sensed by the activated sensor (100, 100', 100") until a reactivation of the sensor (100) is effected.

39. Trailer coupling apparatus according to claim 37 or 38,
**characterized in that** the sensor control circuit (120) after a definable time interval (Δt) automatically reactivates the sensor (100) and stores the influence state (SZ) sensed thereby.

40. Trailer coupling apparatus according to claim 39,
**characterized in that** the sensor control circuit (120) varies the time interval (Δt) after definable periods (T)

41. Trailer coupling apparatus according to claim 39 or 40,
**characterized in that** the sensor control circuit (120) after execution of an active mode changes over to a passive mode, in which automatic activation of the sensor (100, 100', 100") is no longer effected.

42. Trailer coupling apparatus according to one of claims 39 to 41, **characterized in that** the sensor control circuit (120) defines the time interval (Δt) in an event-dependent manner.

43. Trailer coupling apparatus according to one of the preceding claims, **characterized in that** the ball neck (10) is movable by means of an actuator (66) between an operating position (A) and an inoperative position (R) and is lockable in the operating position (A) by means of the fixing device (58, 70, 80), that a controller (130) is provided, by means of which the movement and locking are controllable, and that the controller (130) acquires the trailer presence signal (SZ, DZ) of the at least one sensor (100, 100', 100", 100'", 100"") and, when the trailer presence signal (SZ, DZ) is present, does not allow a release of the locking in the operating position (A).

## Revendications

1. Dispositif d'attelage pour véhicules automobiles (16) comprenant un col de boule (10) tenu sur un logement (30) solidaire du véhicule, qui porte sur son extrémité opposée au logement (30) une boule d'attelage (12), un entraînement (66), avec lequel le col de boule (10) peut être sorti d'une position de travail (A),
**caractérisé en ce que** le dispositif d'attelage est doté d'au moins un capteur (100, 140) enregistrant un critère pour la présence d'une remorque pour la génération d'un signal de présence de remorque, **en ce qu'**il est prévu une commande (130), avec laquelle l'entraînement (66) peut être activé, et **en ce que** la commande (130) interroge le signal de présence de remorque (SZ, DZ) du au moins un capteur (100, 140) et bloque un déplacement du col de boule (10) en cas de présence du signal de présence de remorque (SZ, DZ).

2. Dispositif d'attelage selon la revendication 1, **caractérisé en ce que** la commande (130) interroge les signaux de présence de remorque de plusieurs capteurs (100, 140) et bloque un déplacement du col de boule (10) en cas de présence déjà d'un signal de présence de remorque (SZ, DZ).

3. Dispositif d'attelage selon le préambule de la revendication 1 ou selon l'une quelconque des revendications précédentes, **caractérisé en ce que** ce dispositif présente un dispositif de fixation (58, 70, 80), qui fixe dans un état de fixation le col de boule (10) dans une position de travail (A) et qui, dans un état de desserrage, libère le col de boule pour un déplacement de sortie de la position de travail (A).

4. Dispositif d'attelage selon la revendication 3, **caractérisé en ce que** la commande (130) permet de bloquer une modification de l'état du système de fixation (58, 70, 80).

5. Dispositif d'attelage selon la revendication 4, **caractérisé en ce que** la commande (130) bloque une modification de l'état du système de fixation (58, 70, 80) en cas de présence du signal de présence de remorque (SZ, DZ).

6. Dispositif d'attelage selon l'une quelconque des revendications précédentes, **caractérisé en ce que** le capteur (140) surveille une alimentation en courant de remorque et considère sa présence comme critère pour une remorque accrochée.

7. Dispositif d'attelage selon la revendication 6, **caractérisé en ce que** le capteur (140) détecte une fiche (142), introduite dans la prise (94), de la remorque.

8. Dispositif d'attelage selon la revendication 7, **caractérisé en ce que** le capteur (140) détecte un corps de fiche (152) de la fiche (142) introduite dans la prise (94).

9. Dispositif d'attelage selon la revendication 8, **caractérisé en ce que** le capteur (140) détectant un corps de fiche (152) comprend un bouton-poussoir (144).

10. Dispositif d'attelage selon l'une quelconque des revendications 6 à 9, **caractérisé en ce que** le capteur (140) est conçu comme un circuit (154) détectant une charge électrique de la remorque.

11. Dispositif d'attelage selon la revendication 10, **caractérisé en ce que** le capteur (140) est intégré dans une alimentation (158) pour la prise (94).

12. Dispositif d'attelage selon l'une quelconque des revendications précédentes, **caractérisé en ce que** le capteur (100, 100', 100", 100''', 100'''') contrôle la boule d'attelage (12) et considère une application d'un objet (106, 108) sur la boule d'attelage (12) comme un critère de la présence d'une remorque.

13. Dispositif d'attelage selon l'une quelconque des revendications précédentes, **caractérisé en ce que** le capteur (100, 100'''') est disposé dans la zone de la prise (94).

14. Dispositif d'attelage selon la revendication 13, **caractérisé en ce que** le capteur (100) est intégré dans la prise (94) .

15. Dispositif d'attelage selon l'une quelconque des revendications précédentes, **caractérisé en ce que** le capteur (100, 100', 100'', 100''', 100'''') est disposé sur le col de boule (10).

16. Dispositif d'attelage selon la revendication 15, **caractérisé en ce que** le capteur (100) est disposé dans un boîtier (134) posé sur le col de boule (10).

17. Dispositif d'attelage selon la revendication 15 ou 16, **caractérisé en ce que** le capteur (100) est disposé dans la zone d'une prise (94) disposée sur le col de boule (10).

18. Dispositif d'attelage selon la revendication 17, **caractérisé en ce que** le capteur (100) est intégré dans la prise (94).

19. Dispositif d'attelage selon l'une quelconque des revendications précédentes, **caractérisé en ce que** le capteur (100'') est disposé dans le col de boule (10).

20. Dispositif d'attelage selon l'une quelconque des revendications précédentes, **caractérisé en ce que** le capteur (100, 100'''') détecte la boule d'attelage (12) au moyen d'une zone de détection agencée sur le côté du col de boule (10) en direction de la boule d'attelage (12).

21. Dispositif d'attelage selon l'une quelconque des revendications 1 à 19, **caractérisé en ce que** le capteur (100, 100") détecte l'objet (106, 108) s'appliquant sur la boule d'attelage (12) au moyen de la partie, s'étendant entre le capteur (100', 100'') et la boule d'attelage (12), du col de boule (10).

22. Dispositif d'attelage selon l'une quelconque des revendications précédentes, **caractérisé en ce que** le capteur (100"') est disposé dans la boule d'attelage (12).

23. Dispositif d'attelage selon la revendication 22, **caractérisé en ce que** le capteur (100"') présente une zone de détection attribuée à un côté de la boule d'attelage (12).

24. Dispositif d'attelage selon l'une quelconque des revendications précédentes, **caractérisé en ce que** le capteur (100''', 100'''') travaille comme un capteur pouvant être actionné par effet.

25. Dispositif d'attelage selon la revendication 24, **caractérisé en ce que** le capteur (100"') présente un bouton-poussoir (184), dont les positions peuvent être enregistrées.

26. Dispositif d'attelage selon la revendication 24 ou 25, **caractérisé en ce que** le capteur (100"") présente un levier détecteur, dont les positions peuvent être enregistrées.

27. Dispositif d'attelage selon l'une quelconque des revendications 24 à 26, **caractérisé en ce que** le capteur (100'", 100"") comprend un interrupteur.

28. Dispositif d'attelage selon l'une quelconque des revendications 1 à 23, **caractérisé en ce que** le capteur (100, 100', 100'') travaille sans contact.

29. Dispositif d'attelage selon la revendication 28, **caractérisé en ce que** le capteur (100) travaille comme capteur optique.

30. Dispositif d'attelage selon la revendication 28, **caractérisé en ce que** le capteur (100) travaille comme capteur radar.

31. Dispositif d'attelage selon la revendication 28, **caractérisé en ce que** le capteur (100, 100', 100") travaille comme capteur à ultrasons.

32. Dispositif d'attelage selon l'une quelconque des revendications précédentes, **caractérisé en ce que** le capteur (100) comprend un émetteur (110) et un détecteur (114).

33. Dispositif d'attelage selon l'une quelconque des revendications 1 à 31, **caractérisé en ce que** le capteur (100, 100', 100'') comprend un convertisseur (100, 100') unique.

34. Dispositif d'attelage selon la revendication 33, **caractérisé en ce que** le convertisseur (110) peut être exploité comme émetteur ou récepteur.

35. Dispositif d'attelage selon la revendication 33, **caractérisé en ce que** le convertisseur (110') peut être exploité avec une fréquence de résonance du convertisseur (110') et de l'environnement (10, 12).

36. Dispositif d'attelage selon l'une quelconque des revendications précédentes, **caractérisé en ce que** l'objet détectable par le capteur (100, 100', 100", 100''', 100 " ") est une pièce d'accouplement à boule (106).

37. Dispositif d'attelage selon l'une quelconque des revendications précédentes, **caractérisé en ce qu'**au capteur (100, 100', 100") est attribué un circuit de commande de capteur (120) qui active le capteur (100) pendant des intervalles de temps de détection (Z), mémorise l'état d'influence (SZ) enregistré par le capteur (100) activé et désactive ensuite le capteur (100).

38. Dispositif d'attelage selon la revendication 37, **caractérisé en ce que** le dispositif de commande de capteur (120) mémorise l'état d'effet (SZ) enregistré par le capteur (100, 100', 100") activé jusqu'à ce qu'on ait une nouvelle activation du capteur (100).

39. Dispositif d'attelage selon la revendication 37 ou 38, **caractérisé en ce que** le circuit de commande de capteur (120) active à nouveau spontanément le capteur (100) après un intervalle de temps (Δt) définissable et mémorise l'état d'effet (SZ) enregistré par celui-ci.

40. Dispositif d'attelage selon la revendication 39, **caractérisé en ce que** le circuit de commande de capteur (120) modifie l'intervalle de temps (Δt) après des périodes de temps (T) définissables.

41. Dispositif d'attelage selon la revendication 39 ou 40, **caractérisé en ce que** le circuit de commande de capteur (120) passe après l'écoulement d'un mode actif dans un mode inactif dans lequel on n'a plus d'activation spontanée du capteur (100, 100', 100").

42. Dispositif d'attelage selon l'une quelconque des revendications 39 à 41, **caractérisé en ce que** le circuit de commande de capteur (120) définit l'intervalle de temps (Δt) en fonction de l'événement.

43. Dispositif d.'attelage selon l'une quelconque des revendications précédentes, **caractérisé en ce que** le col sphérique (10) peut être déplacé au moyen d'un entraînement (66) entre une position de travail (A) et une position de repos (R) et peut être fixé dans la position de travail (A) avec le dispositif de fixation (58, 70, 80), **en ce qu'**il est prévu une commande (130) avec laquelle le déplacement et la fixation sont contrôlables, et **en ce que** la commande (130) enregistre le signal de présence de remorque (SZ, DZ) du au moins un capteur (100, 100', 100", 100"', 100" ") et n'autorise pas un détachement de la fixation dans la position de travail (A) en cas de présence du signal de présence de remorque (SZ, DZ).
